# EUROPEAN PATENT SPECIFICATION

(11) **EP 4 367 850 B1**
(45) Date of publication and mention of the grant of the patent: **02.09.2026**
(21) Application number: 22747266.9
(22) Date of filing: 01.07.2022
(51) Int. Cl.: H04L 41/0803, H04L 45/02, H04L 49/351, H04W 8/00, H04W 12/06, H04W 12/08, H04W 84/10, H04L 12/46, H04L 49/354, H04W 76/11, H04L 9/40, H04W 12/69, H04W 88/18

(54) **METHODS AND APPARATUSES FOR CONTROL OF VLAN**
VERFAHREN UND VORRICHTUNGEN ZUR VLAN-STEUERUNG
PROCÉDÉS ET APPAREILS DE COMMANDE DE VLAN

(30) Priority: 03.07.2021 US 202163218291 P; 17.01.2022 WO PCT/CN2022/072390
(43) Date of publication of application: 15.05.2024
(73) Proprietor: Telefonaktiebolaget LM Ericsson (publ), 164 83 Stockholm (SE)
(72) Inventor: LONG, Hongxia, Shanghai 200335 (CN); LUO, Ying, Shanghai 200333 (CN); XU, Yongfeng, Shanghai 200335 (CN); NAZARI, Ala, 136 46 Handen (SE); MIKLÓS, György, 2097 PILISBOROSJENÖ (HU); WANG, Kun, 170 71 Solna (SE)
(74) Representative: Ericsson
(86) International application number: PCT/EP2022/068236
(87) International publication number: WO 2023/280695

(56) References cited:
- NOKIA ET AL: "VLAN Information configuration and information exchange", vol. SA WG2, no. Elbonia; 20200224 - 20200227, 24 February 2020 (2020-02-24), XP051858156, Retrieved from the Internet <URL:https://ftp.3gpp.org/tsg_sa/WG2_Arch/TSGS2_137e_Electronic/Revisions/S2-2002208r01.zip S2-2002208-TSN-VLAN-CR-2_r01.docx> [retrieved on 20200224]
- NOKIA ET AL: "VLAN Information configuration and information exchange", vol. SA WG2, no. Elbonia ;20200420 - 20200423, 10 April 2020 (2020-04-10), XP051874674, Retrieved from the Internet <URL:https://ftp.3gpp.org/tsg_sa/WG2_Arch/TSGS2_138e_Electronic/Docs/S2-2003173.zip S2-2003173_TSN_VLAN ConfigurationInformation-v2.docx> [retrieved on 20200410]
- NOKIA ET AL: "VLAN Information configuration and information exchange", vol. SA WG2, no. Elbonia; 20200224 - 20200227, 18 February 2020 (2020-02-18), XP051855590, Retrieved from the Internet <URL:https://ftp.3gpp.org/tsg_sa/WG2_Arch/TSGS2_137e_Electronic/Docs/S2-2002207.zip S2-2002207-TSN-VLAN_Discussion_v3.docx> [retrieved on 20200218]
- "3rd Generation Partnership Project; Technical Specification Group Services and System Aspects; System architecture for the 5G System (5GS); Stage 2 (Release 17)", 23 April 2021 (2021-04-23), XP052029388, Retrieved from the Internet <URL:https://ftp.3gpp.org/tsg_sa/WG2_Arch/Latest_SA2_Specs/DRAFT_INTERIM/Archive/INTERIM_DRAFT_23501-h10_S2-144E_CRs_Implemented_5.30.2.4.2_H5.zip INTERIM_DRAFT_23501-h10_S2-144E_CRs_Implemented.docx> [retrieved on 20210423]
- HUAWEI ET AL: "Introduction of 5G LAN-type service", vol. SA WG2, no. Kochi, India; 20180121 - 20180125, 15 January 2019 (2019-01-15), XP051590343, Retrieved from the Internet <URL:http://www.3gpp.org/ftp/tsg%5Fsa/WG2%5FArch/TSGS2%5F130%5FKochi/Docs/S2%2D1900675%2Ezip> [retrieved on 20190115]

## Description

### Technical Field

Embodiments of the disclosure generally relate to communication, and, more particularly, to methods and apparatuses for control of virtual local area network (VLAN).

### Background

This section introduces aspects that may facilitate better understanding of the present disclosure. Accordingly, the statements of this section are to be read in this light and are not to be understood as admissions about what is in the prior art or what is not in the prior art.

VLAN membership can be established either statically or dynamically. Static VLANs are also referred to as port-based VLANs. Static VLAN assignments are created by assigning ports to a VLAN. As a device enters the network, the device automatically assumes the VLAN of the port. If the user changes ports and needs access to the same VLAN, the network administrator must manually make a port-to-VLAN assignment for the new connection.

Dynamic VLANs are created using software or by protocol. With a VLAN management policy server (VMPS), an administrator can assign switch ports to VLANs dynamically based on information such as the source medium access control (MAC) address of the device connected to the port or the username used to log onto that device. As a device enters the network, the switch queries a database for the VLAN membership of the port that device is connected to. Institute of electrical and electronics engineers (IEEE) 802.1Q defines multiple VLAN registration protocol (MVRP), an application of multiple registration protocol, allowing bridges to negotiate the set of VLANs to be used over a specific link.

A bridge port can be configured in either access port mode or trunk port mode for VLAN operation. Access port mode generally is connected to an end-device (e.g. computer) for access purpose and a single VLAN is assigned for the access port. Trunk port mode allows ports to transmit and receive data of multiple VLANs. Normally it is used for connection between network devices (e.g. bridges, routers).

The 5th generation (5G) has included some Ethernet support since Release 15 (Rel-15), such as Ethernet protocol data unit (PDU) session and MAC learning. It is enhanced in Rel-16 and Rel-17. Rel-16 introduced 5G support for LAN-type services. Rel-16 also specified that a 5G system can be modeled as one or more logical Ethernet bridges to support integration with Ethernet time sensitive networking (TSN) network.

5G virtual network (VN) group communication includes one-to-one communication and one-to-many communication. One-to-one communication supports forwarding of unicast traffic between two user equipments (UEs) within a 5G VN, or between a UE and a device on the data network (DN). One-to-many communication supports forwarding of multicast traffic and broadcast traffic from one UE (or device on the DN) to many/all UEs within a 5G VN and devices on the DN. 5G VN group can be used for both Internet protocol (IP) PDU session and Ethernet PDU session.

5G VN group data can be provided by application function (AF) to 5G system together with external group identifier (ID). The 5G VN group data can contain: data network name (DNN), single network slice selection assistance information (S-NSSAI), PDU session type, application descriptor, information related with secondary authentication/authorization.

The prior art D1 (NOKIA ET AL: "VLAN Information configuration and information exchange", vol. SA WG2, no. Elbonia; 20200224 - 20200227, 24 February 2020 (2020-02-24), XP051858156) discloses VLAN configuration information exchange between TSN AF and the ports of DS-TT/NW-TT by adding the information to the port management container described in TS 23.501 (Release 17), 23 April 2021 clause 5.28.3.1. The prior art D2 (NOKIA ET AL: "VLAN Information configuration and information exchange", vol. SA WG2, no. Elbonia 20200420 - 20200423,10 April 2020 (2020-04-10) XP051874674) discloses VLAN configuration information can be reported as 5GS TSN bridge capabilities. The VLAN configuration information at TSN-AF comprises of VLAN functionality provided by the 5GS TSN Bridge. The prior art D3 (NOKIA ET AL: "VLAN Information configuration and information exchange", vol. SA WG2, no. Elbonia; 20200224 - 20200227, 18 February 2020 (2020-02-18), XP051855590) discloses how VLAN configuration information of DS-TT / NW-TT ports are exchanged inside a 5GS TSN Bridge. The prior art D4 (3rd Generation Partnership Project; Technical Specification Group Services and System Aspects; System architecture for the 5G System (5GS); Stage 2 (Release 17), 23 April 2021 (2021-04-23)) discloses Transfer of port or bridge management information (paragraph [5.28.3.2]; tables 5.28.3.2-1). The prior art D5 (HUAWEI ET AL: "Introduction of 5G LAN-type service", vol. SA WG2, no. Kochi, India; 20180121 -20180125, 15 January 2019 (2019-01-15), XP051590343) discloses the architecture of 5G LAN- type service and functional descriptions of 5G LAN-type service.

### Summary

The present invention is defined in the appended independent claims to which reference should be made. Advantageous features are set out in the appended dependent claims.

This summary is provided to introduce a selection of concepts in a simplified form that are further described below in the detailed description. This summary is not intended to identify key features or essential features of the claimed subject matter, nor is it intended to be used to limit the scope of the claimed subject matter.

One of the objects of the disclosure is to provide an improved solution for control of VLAN. In particular, one of the problems to be solved by the disclosure is that the existing 5G VN group data lacks port type of VLAN port.

According to a first aspect of the disclosure, there is provided a method performed by a service consumer. The method may comprise sending, to a service provider of a Fifth Generation System (5GS) that provides Ethernet bridging operations for User Equipments (UEs) acting as Ethernet access ports or Ethernet trunk ports, a request for providing configuration information related to a VLAN. The configuration information may indicate a port type of at least one port related to the VLAN.

In this way, the port type can be indicated from the service consumer to support VLAN dynamic provisioning.

In an embodiment of the disclosure, the configuration information may comprise, for each of the at least one port, the port type indicating whether the port is an access port or a trunk port.

In an embodiment of the disclosure, the configuration information may comprise, for an access port in the at least one port, a first VLAN identifier (ID) identifying the VLAN. Or the configuration information may comprise, for a trunk port in the at least one port, a second VLAN ID having a predefined value corresponding to trunk port type.

In an embodiment of the disclosure, the configuration information may indicate, for a trunk port in the at least one port, a list of allowed VLAN ID(s) which are allowed for Ethernet protocol data unit (PDU) sessions, or a list of blocked VLAN ID(s) which are rejected for Ethernet PDU sessions. Or an absence of a list of allowed VLAN ID(s) or blocked VLAN ID(s) may indicate access port type.

In an embodiment of the disclosure, the configuration information may comprise, for the trunk port in the at least one port, the list of allowed VLAN ID(s) or blocked VLAN ID(s).

In an embodiment of the disclosure, the configuration information may further comprise, for the trunk port in the at least one port, an indicator indicating a usage of the list of allowed VLAN ID(s) or blocked VLAN ID(s).

In an embodiment of the disclosure, the usage of the list of allowed VLAN ID(s) or blocked VLAN ID(s) may comprise at least one of: authentication, filtering, and configuration.

In an embodiment of the disclosure, the configuration information may comprise, for the trunk port in the at least one port, an Internet protocol (IP) address of a server hosting the list of allowed VLAN ID(s) or blocked VLAN ID(s).

In an embodiment of the disclosure, the service consumer may be an application function (AF), and the service provider may be a network exposure function (NEF).

In an embodiment of the disclosure, the configuration information may be included in the request as LAN parameters.

In an embodiment of the disclosure, the service consumer may be an AF, and the service provider may be a unified data management (UDM). Or the service consumer may be an operation, administration and maintenance (OAM), and the service provider may be a provision system.

In an embodiment of the disclosure, the configuration information may be included in the request as virtual network (VN) group data.

In an embodiment of the disclosure, the VLAN ID is only applied to Ethernet PDU session.

According to a second aspect of the disclosure, there is provided a method performed by a first service provider of a Fifth Generation System (5GS) that provides Ethernet bridging operations for User Equipments (UEs) acting as Ethernet access ports or Ethernet trunk ports. The method may comprise receiving, from a service consumer, a first request for providing configuration information related to a VLAN. The configuration information may indicate a port type of at least one port related to the VLAN. The method may further comprise sending, to a second service provider, a second request for providing the configuration information related to the VLAN. The configuration information may indicate the port type of the at least one port related to the VLAN.

In this way, the port type can be provisioned from the first service provider to the second service provider to support VLAN dynamic provisioning.

In an embodiment of the disclosure, the configuration information may comprise, for each of the at least one port, the port type indicating whether the port is an access port or a trunk port.

In an embodiment of the disclosure, the configuration information may comprise, for an access port in the at least one port, a first VLAN ID identifying the VLAN. Or the configuration information may comprise, for a trunk port in the at least one port, a second VLAN ID having a predefined value corresponding to trunk port type.

In an embodiment of the disclosure, the configuration information may indicate, for a trunk port in the at least one port, a list of allowed VLAN ID(s) which are allowed for Ethernet PDU sessions, or a list of blocked VLAN ID(s) which are rejected for Ethernet PDU sessions. Or an absence of a list of allowed VLAN ID(s) or blocked VLAN ID(s) may indicate access port type.

In an embodiment of the disclosure, the configuration information may comprise, for the trunk port in the at least one port, the list of allowed VLAN ID(s) or blocked VLAN ID(s).

In an embodiment of the disclosure, the configuration information may further comprise, for the trunk port in the at least one port, an indicator indicating a usage of the list of allowed VLAN ID(s) or blocked VLAN ID(s).

In an embodiment of the disclosure, the usage of the list of allowed VLAN ID(s) or blocked VLAN ID(s) may comprise at least one of: authentication, filtering, and configuration.

In an embodiment of the disclosure, the configuration information may comprise, for the trunk port in the at least one port, an IP address of a server hosting the list of allowed VLAN ID(s) or blocked VLAN ID(s).

In an embodiment of the disclosure, the service consumer may be an AF, the first service provider may be an NEF, and the second service provider may be a UDM.

In an embodiment of the disclosure, the configuration information may be included in the first request as LAN parameters. Or the configuration information may be included in the second request as VN group data.

In an embodiment of the disclosure, the service consumer may be an NEF, the first service provider may be a UDM, and the second service provider may be a UDR. Or the service consumer may be an AF, the first service provider may be a UDM, and the second service provider may be a UDR. Or the service consumer may be an OAM, the first service provider may be a provision system, and the second service provider may be a UDR.

In an embodiment of the disclosure, the configuration information may be included in the first and second requests as VN group data.

In an embodiment of the disclosure, the configuration information may comprise, for a trunk port in the at least one port, an IP address of a server hosting a list of allowed VLAN ID(s) or blocked VLAN ID(s). The method may further comprise obtaining the list of allowed VLAN ID(s) or blocked VLAN ID(s) from the server.

In an embodiment of the disclosure, the VLAN ID is only applied to Ethernet PDU session.

According to a third aspect of the disclosure, there is provided a method performed by a UDR. The method may comprise receiving, from a service consumer, a request for providing configuration information related to a VLAN. The configuration information may indicate a port type of at least one port related to the VLAN. The method may further comprise maintaining the configuration information.

In this way, it is possible for the UDR to provide to an SMF the configuration information indicating the port type.

In an embodiment of the disclosure, the configuration information may be included in the request as VN group data.

In an embodiment of the disclosure, maintaining the configuration information may comprise storing the configuration information as the VN group data. Maintaining the configuration information may further comprise allocating a shared data ID for the VN group data. Maintaining the configuration information may further comprise associating, for each VN group member, session management data of the VN group member with the shared data ID and an internal group ID for the VN group member.

In an embodiment of the disclosure, the internal group ID may be allocated by the UDR.

In an embodiment of the disclosure, the service consumer may be a UDM, or a provision system.

In an embodiment of the disclosure, the configuration information may comprise, for each of the at least one port, the port type indicating whether the port is an access port or a trunk port.

In an embodiment of the disclosure, the configuration information may comprise, for an access port in the at least one port, a first VLAN ID identifying the VLAN. Or the configuration information may comprise, for a trunk port in the at least one port, a second VLAN ID having a predefined value corresponding to trunk port type.

In an embodiment of the disclosure, the configuration information may indicate, for a trunk port in the at least one port, a list of allowed VLAN ID(s) which are allowed for Ethernet PDU sessions, or a list of blocked VLAN ID(s) which are rejected for Ethernet PDU sessions. Or an absence of a list of allowed VLAN ID(s) or blocked VLAN ID(s) may indicate access port type.

In an embodiment of the disclosure, the configuration information may comprise, for the trunk port in the at least one port, the list of allowed VLAN ID(s) or blocked VLAN ID(s).

In an embodiment of the disclosure, the configuration information may further comprise, for the trunk port in the at least one port, an indicator indicating a usage of the list of allowed VLAN ID(s) or blocked VLAN ID(s).

In an embodiment of the disclosure, the usage of the list of allowed VLAN ID(s) or blocked VLAN ID(s) may comprise at least one of: authentication, filtering, and configuration.

In an embodiment of the disclosure, the configuration information may comprise, for the trunk port in the at least one port, an IP address of a server hosting the list of allowed VLAN ID(s) or blocked VLAN ID(s).

In an embodiment of the disclosure, the VLAN ID is only applied to Ethernet PDU session.

According to a fourth aspect of the disclosure, there is provided a method performed by a session management function (SMF). The method may comprise obtaining, from a UDM, session management data for a terminal device. The session management data may indicate that the terminal device belongs to a VN group having a shared data ID. The method may further comprise obtaining, from the UDM, VN group data corresponding to the shared data ID. The VN group data may indicate a port type of at least one VLAN port corresponding to at least one member of the VN group.

In this way, the VN group data indicating the port type can be obtained by the SMF so as to control the corresponding PDU sessions.

In an embodiment of the disclosure, the VN group data may comprise, for each of the at least one VLAN port, the port type indicating whether the VLAN port is an access port or a trunk port.

In an embodiment of the disclosure, the VN group data may comprise, for an access VLAN port in the at least one VLAN port, a first VLAN ID identifying the VLAN. Or the VN group data may comprise, for a trunk VLAN port in the at least one VLAN port, a second VLAN ID having a predefined value corresponding to trunk port type.

In an embodiment of the disclosure, the VN group data may indicate, for a trunk VLAN port in the at least one VLAN port, a list of allowed VLAN ID(s) which are allowed for Ethernet PDU sessions, or a list of blocked VLAN ID(s) which are rejected for Ethernet PDU session. Or an absence of a list of allowed VLAN ID(s) or blocked VLAN ID(s) may indicate access port type.

In an embodiment of the disclosure, the VN group data may comprise, for the trunk VLAN port, the list of allowed VLAN ID(s) or blocked VLAN ID(s).

In an embodiment of the disclosure, the VN group data may further comprise, for the trunk VLAN port, an indicator indicating a usage of the list of allowed VLAN ID(s) or blocked VLAN ID(s).

In an embodiment of the disclosure, the usage of the list of allowed VLAN ID(s) or blocked VLAN ID(s) may comprise at least one of: authentication, filtering, and configuration.

In an embodiment of the disclosure, the VN group data may comprise, for the trunk VLAN port, an IP address of a server hosting the list of allowed VLAN ID(s) or blocked VLAN ID(s).

In an embodiment of the disclosure, the method may further comprise obtaining the list of allowed VLAN ID(s) or blocked VLAN ID(s) from the server.

In an embodiment of the disclosure, the VLAN ID is only applied to Ethernet PDU session.

According to a fifth aspect of the disclosure, there is provided a method performed by a UDM. The method may comprise receiving, from an SMF, a request for obtaining VN group data corresponding to a shared data ID. The method may further comprise obtaining, from a UDR, the VN group data corresponding to the shared data ID. The VN group data may indicate a port type of at least one VLAN port corresponding to at least one member of the VN group. The method may further comprise sending the obtained VN group data to the SMF.

In this way, the VN group data indicating the port type can be provided to the SMF so as to control the corresponding PDU sessions.

In an embodiment of the disclosure, the VN group data may comprise, for each of the at least one VLAN port, the port type indicating whether the VLAN port is an access port or a trunk port.

In an embodiment of the disclosure, the VN group data may comprise, for an access VLAN port in the at least one VLAN port, a first VLAN ID identifying the VLAN. Or the VN group data may comprise, for a trunk VLAN port in the at least one VLAN port, a second VLAN ID having a predefined value corresponding to trunk port type.

In an embodiment of the disclosure, the VN group data may indicate, for a trunk VLAN port in the at least one VLAN port, a list of allowed VLAN ID(s) which are allowed for Ethernet PDU sessions, or a list of blocked VLAN ID(s) which are rejected for Ethernet PDU sessions. Or an absence of a list of allowed VLAN ID(s) or blocked VLAN ID(s) may indicate access port type.

In an embodiment of the disclosure, the VN group data may comprise, for the trunk VLAN port, the list of allowed VLAN ID(s) or blocked VLAN ID(s).

In an embodiment of the disclosure, the VN group data may further comprise, for the trunk VLAN port, an indicator indicating a usage of the list of allowed VLAN ID(s) or blocked VLAN ID(s).

In an embodiment of the disclosure, the usage of the list of allowed VLAN ID(s) or blocked VLAN ID(s) may comprise at least one of: authentication, filtering, and configuration.

In an embodiment of the disclosure, the VN group data may comprise, for the trunk VLAN port, an IP address of a server hosting the list of allowed VLAN ID(s) or blocked VLAN ID(s).

In an embodiment of the disclosure, the VLAN ID is only applied to Ethernet PDU session.

According to a sixth aspect of the disclosure, there is provided a method performed by a UDR. The method may comprise receiving, from a UDM, a request for obtaining VN group data corresponding to a shared data ID. The method may further comprise retrieving the VN group data corresponding to the shared data ID. The VN group data may indicate a port type of at least one VLAN port corresponding to at least one member of the VN group. The method may further comprise sending the retrieved VN group data to the UDM.

In this way, it is possible to provide the VN group data indicating the port type to an SMF so as to control the corresponding PDU sessions.

In an embodiment of the disclosure, the VN group data may comprise, for each of the at least one VLAN port, the port type indicating whether the VLAN port is an access port or a trunk port.

In an embodiment of the disclosure, the VN group data may comprise, for an access VLAN port in the at least one VLAN port, a first VLAN ID identifying the VLAN. Or the VN group data may comprise, for a trunk VLAN port in the at least one VLAN port, a second VLAN ID having a predefined value corresponding to trunk port type.

In an embodiment of the disclosure, the VN group data may indicate, for a trunk VLAN port in the at least one VLAN port, a list of allowed VLAN ID(s) which are allowed for Ethernet PDU sessions, or a list of blocked VLAN ID(s) which are rejected for Ethernet PDU sessions. Or an absence of a list of allowed VLAN ID(s) or blocked VLAN ID(s) may indicate access port type.

In an embodiment of the disclosure, the VN group data may comprise, for the trunk VLAN port, the list of allowed VLAN ID(s) or blocked VLAN ID(s).

In an embodiment of the disclosure, the VN group data may further comprise, for the trunk VLAN port, an indicator indicating a usage of the list of allowed VLAN ID(s) or blocked VLAN ID(s).

In an embodiment of the disclosure, the usage of the list of allowed VLAN ID(s) or blocked VLAN ID(s) may comprise at least one of: authentication, filtering, and configuration.

In an embodiment of the disclosure, the VN group data may comprise, for the trunk VLAN port, an IP address of a server hosting the list of allowed VLAN ID(s) or blocked VLAN ID(s).

In an embodiment of the disclosure, the VLAN ID is only applied to Ethernet PDU session.

According to a seventh aspect of the disclosure, there is provided a service consumer. The service consumer may comprise at least one processor and at least one memory. The at least one memory may contain instructions executable by the at least one processor, whereby the service consumer may be operative to send, to a service provider, a request for providing configuration information related to a VLAN. The configuration information may indicate a port type of at least one port related to the VLAN.

In an embodiment of the disclosure, the service consumer may be operative to perform the method according to the above first aspect.

According to an eighth aspect of the disclosure, there is provided a first service provider. The first service provider may comprise at least one processor and at least one memory. The at least one memory may contain instructions executable by the at least one processor, whereby the first service provider may be operative to receive, from a service consumer, a first request for providing configuration information related to a VLAN. The configuration information may indicate a port type of at least one port related to the VLAN. The first service provider may be further operative to send, to a second service provider, a second request for providing the configuration information related to the VLAN. The configuration information may indicate the port type of the at least one port related to the VLAN.

In an embodiment of the disclosure, the first service provider may be operative to perform the method according to the above second aspect.

According to a ninth aspect of the disclosure, there is provided a UDR. The UDR may comprise at least one processor and at least one memory. The at least one memory may contain instructions executable by the at least one processor, whereby the UDR may be operative to receive, from a service consumer, a request for providing configuration information related to a VLAN. The configuration information may indicate a port type of at least one port related to the VLAN. The UDR may be further operative to maintain the configuration information.

In an embodiment of the disclosure, the UDR may be operative to perform the method according to the above third aspect.

According to a tenth aspect of the disclosure, there is provided an apparatus implementing an SMF. The apparatus may comprise at least one processor and at least one memory. The at least one memory may contain instructions executable by the at least one processor, whereby the apparatus may be operative to obtain, from a UDM, session management data for a terminal device. The session management data may indicate that the terminal device belongs to a VN group having a shared data ID. The apparatus may be further operative to obtain, from the UDM, VN group data corresponding to the shared data ID. The VN group data may indicate a port type of at least one VLAN port corresponding to at least one member of the VN group.

In an embodiment of the disclosure, the apparatus may be operative to perform the method according to the above fourth aspect.

According to an eleventh aspect of the disclosure, there is provided an apparatus implementing a UDM. The apparatus may comprise at least one processor and at least one memory. The at least one memory may contain instructions executable by the at least one processor, whereby the apparatus may be operative to receive, from an SMF, a request for obtaining VN group data corresponding to a shared data ID. The apparatus may be further operative to obtain, from a UDR, the VN group data corresponding to the shared data ID. The VN group data may indicate a port type of at least one VLAN port corresponding to at least one member of the VN group. The apparatus may be further operative to send the obtained VN group data to the SMF.

In an embodiment of the disclosure, the apparatus may be operative to perform the method according to the above fifth aspect.

According to a twelfth aspect of the disclosure, there is provided a UDR. The UDR may comprise at least one processor and at least one memory. The at least one memory may contain instructions executable by the at least one processor, whereby the UDR may be operative to receive, from a UDM, a request for obtaining VN group data corresponding to a shared data ID. The UDR may be further operative to retrieve the VN group data corresponding to the shared data ID. The VN group data may indicate a port type of at least one VLAN port corresponding to at least one member of the VN group. The UDR may be further operative to send the retrieved VN group data to the UDM.

In an embodiment of the disclosure, the UDR may be operative to perform the method according to the above sixth aspect.

According to a thirteenth aspect of the disclosure, there is provided a computer program product. The computer program product may comprise instructions which when executed by at least one processor, cause the at least one processor to perform the method according to any of the above first to sixth aspects.

According to a fourteenth aspect of the disclosure, there is provided a computer readable storage medium. The computer readable storage medium may store thereon instructions which when executed by at least one processor, cause the at least one processor to perform the method according to any of the above first to sixth aspects.

According to a fifteenth aspect of the disclosure, there is provided a service consumer. The service consumer may comprise a sending module for sending, to a service provider, a request for providing configuration information related to a VLAN. The configuration information may indicates a port type of at least one port related to the VLAN.

According to a sixteenth aspect of the disclosure, there is provided a first service provider. The first service provider may comprise a reception module for receiving, from a service consumer, a first request for providing configuration information related to a VLAN. The configuration information may indicate a port type of at least one port related to the VLAN. The first service provider may further comprise a sending module for sending, to a second service provider, a second request for providing the configuration information related to the VLAN. The configuration information may indicate the port type of the at least one port related to the VLAN.

According to a seventeenth aspect of the disclosure, there is provided a UDR. The UDR may comprise a reception module for receiving, from a service consumer, a request for providing configuration information related to a VLAN. The configuration information may indicate a port type of at least one port related to the VLAN. The UDR may further comprise a maintaining module for maintaining the configuration information.

According to an eighteenth aspect of the disclosure, there is provided an apparatus implementing an SMF. The apparatus may comprise a first obtaining module for obtaining, from a UDM, session management data for a terminal device. The session management data may indicate that the terminal device belongs to a VN group having a shared data ID. The apparatus may further comprise a second obtaining module for obtaining, from the UDM, VN group data corresponding to the shared data ID. The VN group data may indicate a port type of at least one VLAN port corresponding to at least one member of the VN group.

According to a nineteenth aspect of the disclosure, there is provided an apparatus implementing a UDM. The apparatus may comprise a reception module for receiving, from an SMF, a request for obtaining VN group data corresponding to a shared data ID. The apparatus may further comprise an obtaining module for obtaining, from a UDR, the VN group data corresponding to the shared data ID. The VN group data may indicate a port type of at least one VLAN port corresponding to at least one member of the VN group. The apparatus may further comprise a sending module for sending the obtained VN group data to the SMF.

According to a twentieth aspect of the disclosure, there is provided a UDR. The UDR may comprise a reception module for receiving, from a UDM, a request for obtaining VN group data corresponding to a shared data ID. The UDR may further comprise a retrieving module for retrieving the VN group data corresponding to the shared data ID. The VN group data may indicate a port type of at least one VLAN port corresponding to at least one member of the VN group. The UDR may further comprise a sending module for sending the retrieved VN group data to the UDM.

According to a twenty-first aspect of the disclosure, there is provided a method implemented in a communication system including an apparatus implementing an SMF, an apparatus implementing a UDM, and a UDR. The method may comprise the steps of the methods according to the above fourth to sixth aspects.

According to a twenty-second aspect of the disclosure, there is provided a communication system. The communication system may comprise an apparatus implementing an SMF according to the above tenth or eighteenth aspect, an apparatus implementing a UDM according to the above eleventh or nineteenth aspect, and a UDR according to the above twelfth or twentieth aspect.

### Brief Description of the Drawings

These and other objects, features and advantages of the disclosure will become apparent from the following detailed description of illustrative embodiments thereof, which are to be read in connection with the accompanying drawings.
FIG. 1 is a diagram illustrating an exemplary communication system into which an embodiment of the disclosure is applicable;
FIG. 2 is a flowchart illustrating a method performed by a service consumer according to an embodiment of the disclosure;
FIG. 3 is a flowchart illustrating a method performed by a first service provider according to an embodiment of the disclosure;
FIG. 4 is a flowchart illustrating a method performed by a first service provider according to an embodiment of the disclosure;
FIG. 5 is a flowchart illustrating a method performed by a UDR according to an embodiment of the disclosure;
FIG. 6 is a flowchart for explaining the method of FIG. 5;
FIG. 7 is a flowchart illustrating a method performed by an SMF according to an embodiment of the disclosure;
FIG. 8 is a flowchart illustrating a method performed by an SMF according to an embodiment of the disclosure;
FIG. 9 is a flowchart illustrating a method performed by a UDM according to an embodiment of the disclosure;
FIG. 10 is a flowchart illustrating a method performed by a UDR according to an embodiment of the disclosure;
FIGs. 11A-11B are flowcharts illustrating exemplary processes according to an embodiment of the disclosure;
FIG. 12 is a flowchart illustrating an exemplary process according to an embodiment of the disclosure;
FIGs. 13A-13B are flowcharts illustrating an exemplary process according to an embodiment of the disclosure;
FIG. 14 is a block diagram showing an apparatus suitable for use in practicing some embodiments of the disclosure;
FIG. 15 is a block diagram showing a service consumer according to an embodiment of the disclosure;
FIG. 16 is a block diagram showing a first service provider according to an embodiment of the disclosure;
FIG. 17 is a block diagram showing a UDR according to an embodiment of the disclosure;
FIG. 18 is a block diagram showing an apparatus implementing an SMF according to an embodiment of the disclosure;
FIG. 19 is a block diagram showing an apparatus implementing a UDM according to an embodiment of the disclosure; and
FIG. 20 is a block diagram showing a UDR according to an embodiment of the disclosure.

### Detailed Description

For the purpose of explanation, details are set forth in the following description in order to provide a thorough understanding of the embodiments disclosed.

VLAN group management and dynamic VLAN is proposed as one of 3rd generation partnership project (3GPP) Rel-18 topics (i.e. "Study on generic group management, exposure and communication enhancements").

In order for 5G system to support dynamic VLAN management and configuration, the priority application US63/218291 has proposed to use 5G virtual network (VN) group data to carry VLAN information, and provision it to 5G system. The present disclosure is complementary to the priority application, providing details about UDR, UDM enhancement for supporting VLAN dynamic provisioning.

The first problem with the priority application is that it did not describe details about how UDM and UDR can support the new fields of VLAN related provisioning. The second problem with the priority application is that it introduced a new field in 5G VN group data for VLAN ID, and optionally a new field for a VLAN whitelist or blacklist, however the port type has not been listed as part of VN group data.

3GPP technical specification (TS) 23.501(clause 5.6.10.2) currently allows that "SMF may receive a list of VLAN tags from DN-AAA, or may be locally configured with allowed VLAN tags values". 3GPP only specifies, for authentication, authorization, and accounting (AAA) secondary authentication purpose, that the allowed VLAN list can be provisioned from 5G VN group data described in TS 23.502, table 4.15.6.3b-1.

The third problem is that allowed VLAN tags list can be used for following multiple purposes: DN-AAA secondary authentication (used for filtering, to filter out unauthenticated device and/or VLAN); avoid VLAN tag conflicts (used for filtering, to filter out VLANs already used for other purpose); VLAN trunk port static configuration (used for statically configuring, to configure VLAN tags on a trunk port). The different usage of the allowed VLAN list has the impact on 5GS operation. In current technical specification, there is no way to distinguish different usage of allowed VLAN list.

The fourth problem is that 3GPP only specifies, for AAA secondary authentication purpose, that the allowed VLAN list can be provisioned from 5G VN group data described in TS 23.502, table 4.15.6.3b-1. However, apart from secondary authentication purpose, other use cases of allowed VLAN list (e.g. for the purpose of avoiding VLAN conflict, or VLAN trunk static configuration), 3GPP only allows locally configured manner, i.e. there is no way to provision it externally (e.g. via exposure).

The present disclosure proposes an improved solution for control of VLAN. In an aspect, the present disclosure describes how UDM and UDR can support VLAN related provisioning. Specifically, 5G VN group configuration data is enhanced with VLAN configuration data, which is managed by UDM/UDR with following extended information. One type of information is VLAN identifier (or simply referred to as VID), which may be the ethernet VLAN identifier for the access port or predefined VLAN identifier for the trunk port. For example, this information may be mandatory for 5G to support Ethernet type PDU session and/or the dynamic VLAN group management and provisioning.

Another type of information is VLAN Port Type, which may be ACCESS or TRUNK. For example, this parameter may be optional for 5G to support Ethernet type PDU session and/or the dynamic VLAN group management and provisioning.

Another type of information is VLAN Identifier List, which may be the whitelisted or blacklisted VLAN identifier list depending on the allowed/blocked indication, and applies to trunk port only. For whitelist it could be further indicated the VLAN list usage type, e.g. for authentication/filtering (allowed/filtering) or for configuration. Alternatively, an IP address of a server which hosts the VLAN list information may be provided. For example, this parameter may be optional for 5G to support Ethernet type PDU session and/or the dynamic VLAN group management and provisioning.

In another aspect, the present disclosure provides a method about how to provision ethernet VLAN configuration for a VN group into UDM/UDR as part of VN group configuration data. There may be different provisioning alternatives. In Alternative 1, AF may configure VN group configuration data with VLAN configuration data into UDM through NEF if the AF is not trusted or directly to UDM if the AF is trusted. UDM may store VN group configuration data with VLAN configuration data into UDR. In Alternative 2, OAM administrator may configure ethernet VLAN configuration data for a VN group through provisioning system into UDR directly.

In another aspect, the present disclosure also provides another method about how to provide ethernet VLAN configuration data for a VN group to SMF for session management of ethernet PDU sessions related to a VN group. Specifically, UDM may provide session management subscription data with a shared data identifier pointing to a shared VN group data to SMF. SMF may subsequently fetch the shared VN group data with VLAN configuration data included.

To sum up, to address the above first problem, 5G VN group configuration data is enhanced with VLAN configuration data, which can be provisioned by AF or OAM administrator and stored into UDR. UDM may provide ethernet VLAN configuration data for a VN group to SMF for session management of ethernet PDU sessions related to a VN group. UDM may provide session management subscription data with a shared data identifier pointing to a shared VN group data to SMF. SMF may subsequently fetch the shared VN group data with VLAN configuration data included.

To address the above second problem, there can be multiple options. The first option is to add a new field in 5G VN group data to indicate port VLAN type (i.e., Truck or Access port). The second option is to use "VLAN ID" field of provisioning data. For trunk port, a "predefined VLAN ID" value is specifically defined as a flag to indicate it is a trunk port. The value is just used as an indicator, not for traffic filtering. For access port, the value of "VLAN ID" is used for traffic filtering and forwarding. The third option is to use the whitelist/blacklist field as an indication (e.g. in case VLAN whitelist/blacklist is not presented, the port is "access type").

To address the above third problem, an indicator can be introduced to show different usage of VLAN list. One usage may be traffic filtering purpose (this may include authentication purpose, as unauthenticated VLAN will be filtered out). For example, either "allowed" or "blocked" may be indicated. Another usage may be configuration purpose.

To address the above fourth problem, it is proposed to add VLAN list (either allowed VLAN (whitelist), or rejected VLAN list (blacklist)) as part of external provisioning data to 5G system (e.g. a new field of 5G VN group data). An additional indicator can be provided together with the VLAN list to differentiate the usage of the VLAN list. Alternatively, an IP address of a server which hosts the VLAN list information may be added.

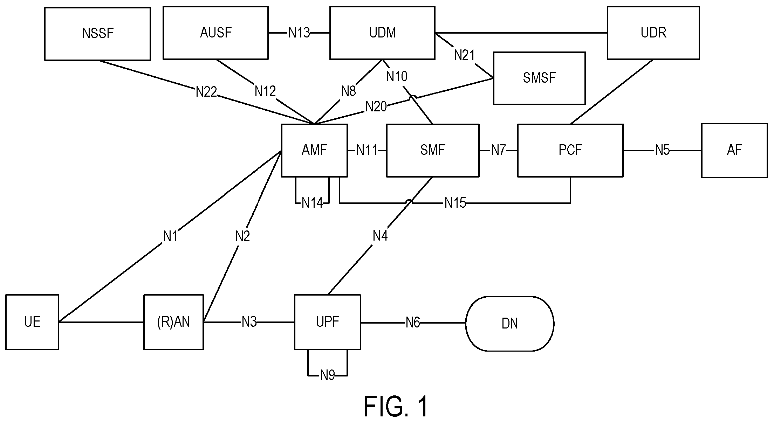

Hereinafter, the solution of the present disclosure will be described in detail with reference to FIGs. 1-20.

FIG. 1 is a diagram illustrating an exemplary communication system into which an embodiment of the disclosure is applicable. As shown, the communication system comprises a UE, a (R)AN, a user plane function (UPF), a data network (DN), an access and mobility management function (AMF), a session management function (SMF), a policy control function (PCF), an application function (AF), a short message service function (SMSF), a network slice selection function (NSSF), an authentication server function (AUSF), a unified data management (UDM) and a unified data repository (UDR). The functional description of the above entities is specified in clause 6 of 3GPP TS 23.501, which is incorporated herein by reference in its entirety.

Note that the term UE used herein may also be referred to as, for example, terminal device, access terminal, mobile station, mobile unit, subscriber station, or the like. It may refer to any end device that can access a wireless communication network and receive services therefrom. By way of example and not limitation, the UE may include a portable computer, an image capture terminal device such as a digital camera, a gaming terminal device, a music storage and playback appliance, a mobile phone, a cellular phone, a smart phone, a tablet, a wearable device, a personal digital assistant (PDA), or the like.

In an Internet of things (IoT) scenario, a UE may represent a machine or other device that performs monitoring and/or measurements, and transmits the results of such monitoring and/or measurements to another UE and/or a network equipment. In this case, the UE may be a machine-to-machine (M2M) device, which may, in a 3GPP context, be referred to as a machine-type communication (MTC) device. Particular examples of such machines or devices may include sensors, metering devices such as power meters, industrial machineries, bikes, vehicles, or home or personal appliances, e.g. refrigerators, televisions, personal wearables such as watches, and so on.

As used herein, the term "communication system" refers to a system following any suitable communication standards, such as the first generation (1G), 2G, 2.5G, 2.75G, 3G, 4G, 4.5G, 5G communication protocols, and/or any other protocols either currently known or to be developed in the future. Furthermore, the communications between a terminal device and a network node in the communication system may be performed according to any suitable generation communication protocols, including, but not limited to, 1G, 2G, 2.5G, 2.75G, 3G, 4G, 4.5G, 5G communication protocols, and/or any other protocols either currently known or to be developed in the future. In addition, the specific terms used herein do not limit the present disclosure only to the communication system related to the specific terms, which however can be more generally applied to other communication systems.

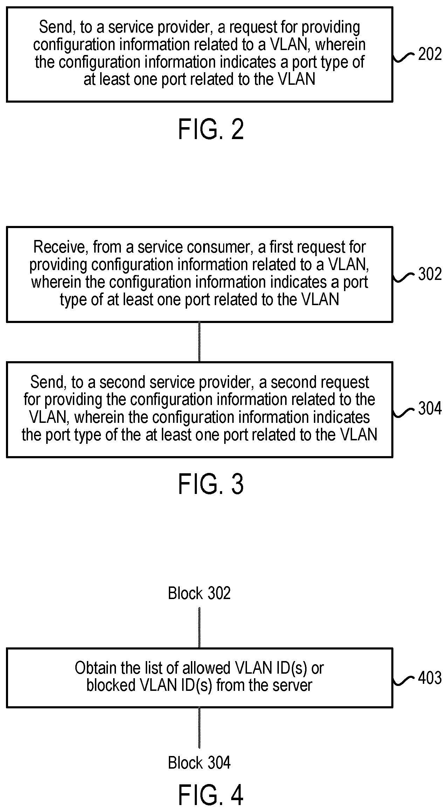

FIG. 2 is a flowchart illustrating a method performed by a service consumer according to an embodiment of the disclosure. For example, as a first case, the service consumer may be an AF, and the corresponding service provider may be an NEF. As a second case, the service consumer may be an AF, and the service provider may be a UDM. As a third case, the service consumer may be an OAM, and the service provider may be a provision system. Note that the network function or network entity mentioned herein may be implemented either as a network element on a dedicated hardware, as a software instance running on a dedicated hardware, or as a virtualized function instantiated on an appropriate platform, e.g. on a cloud infrastructure.

At block 202, the service consumer sends, to the service provider, a request for providing configuration information related to a VLAN. The configuration information indicates a port type of at least one port related to the VLAN. The request may comprise the configuration related to the VLAN. In the above first case, the configuration information may be included in the request as LAN parameters. In the above second and third cases, the configuration information may be included in the request as VN group data. With the method of FIG. 2, the port type can be indicated from the service consumer to support VLAN dynamic provisioning.

For example, there may be three options to indicate the port type. As the first option, the configuration information may comprise, for each of the at least one port, the port type indicating whether the port is an access port or a trunk port. In this first option, the port type is explicitly indicated. As the second option, the configuration information may comprise, for an access port in the at least one port, a first VLAN ID identifying the VLAN. Or the configuration information may comprise, for a trunk port in the at least one port, a second VLAN ID having a predefined value corresponding to trunk port type. In this second option, the port type is implicitly indicated. As the third option, the configuration information may indicate, for a trunk port in the at least one port, a list of allowed VLAN ID(s) which are allowed for Ethernet PDU sessions (since VLAN operations are discussed here, only Ethernet PDU sessions to which VLAN ID(s) are applicable are mentioned here), or a list of blocked VLAN ID(s) which are rejected for Ethernet PDU sessions. Or an absence of a list of allowed VLAN ID(s) or blocked VLAN ID(s) may indicate access port type. In this third option, the port type is implicitly indicated.

For example, there may be two alternative for the third option. In the first alternative, the configuration information may comprise, for the trunk port in the at least one port, the list of allowed VLAN ID(s) or blocked VLAN ID(s). In this first alternative, the list of allowed VLAN ID(s) or blocked VLAN ID(s) is directly indicated. Optionally, the configuration information may further comprise, for the trunk port in the at least one port, an indicator indicating a usage of the list of allowed VLAN ID(s) or blocked VLAN ID(s). The usage of the list of allowed VLAN ID(s) or blocked VLAN ID(s) may comprise at least one of: authentication, filtering, and configuration. In the second alternative, the configuration information may comprise, for the trunk port in the at least one port, an IP address of a server hosting the list of allowed VLAN ID(s) or blocked VLAN ID(s). In this second alternative, the list of allowed VLAN ID(s) or blocked VLAN ID(s) is indirectly indicated.

FIG. 3 is a flowchart illustrating a method performed by a first service provider according to an embodiment of the disclosure. For example, as a first case, the first service provider may be an NEF, the corresponding service consumer may be an AF, and the corresponding second service provider may be a UDM. As a second case, the first service provider may be a UDM, the corresponding service consumer is an NEF, and the corresponding second service provider may be a UDR. As a third case, the first service provider may be a UDM, the corresponding service consumer may be an AF, and the corresponding second service provider may be a UDR. As a fourth case, the first service provider may be a provision system (e.g. an operation support system (OSS)), the corresponding service consumer may be an OAM, and the corresponding second service provider may be a UDR.

At block 302, the first service provider receives, from the service consumer, a first request for providing configuration information related to a VLAN. The configuration information indicates a port type of at least one port related to the VLAN. The first request may comprise the configuration related to the VLAN. For example, there may be three options to indicate the port type. As the first option, the configuration information may comprise, for each of the at least one port, the port type indicating whether the port is an access port or a trunk port. In this first option, the port type is explicitly indicated. As the second option, the configuration information may comprise, for an access port in the at least one port, a first VLAN ID identifying the VLAN. Or the configuration information may comprise, for a trunk port in the at least one port, a second VLAN ID having a predefined value corresponding to trunk port type. In this second option, the port type is implicitly indicated. As the third option, the configuration information may indicate, for a trunk port in the at least one port, a list of allowed VLAN ID(s) which are allowed for Ethernet PDU sessions, or a list of blocked VLAN ID(s) which are rejected for Ethernet PDU sessions. Or an absence of a list of allowed VLAN ID(s) or blocked VLAN ID(s) may indicate access port type. In this third option, the port type is implicitly indicated.

For example, there may be two alternative for the third option. In the first alternative, the configuration information may comprise, for the trunk port in the at least one port, the list of allowed VLAN ID(s) or blocked VLAN ID(s). In this first alternative, the list of allowed VLAN ID(s) or blocked VLAN ID(s) is directly indicated. Optionally, the configuration information may further comprise, for the trunk port in the at least one port, an indicator indicating a usage of the list of allowed VLAN ID(s) or blocked VLAN ID(s). The usage of the list of allowed VLAN ID(s) or blocked VLAN ID(s) may comprise at least one of: authentication, filtering, and configuration. In the second alternative, the configuration information may comprise, for the trunk port in the at least one port, an IP address of a server hosting the list of allowed VLAN ID(s) or blocked VLAN ID(s). In this second alternative, the list of allowed VLAN ID(s) or blocked VLAN ID(s) is indirectly indicated.

At block 304, the first service provider sends, to the second service provider, a second request for providing the configuration information related to the VLAN. The configuration information indicates the port type of the at least one port related to the VLAN. The second request may comprise the configuration information related to the VLAN. In the above first case, the configuration information may be included in the first request as LAN parameters, and the configuration information may be included in the second request as VN group data. In the above second to fourth cases, the configuration information may be included in the first and second requests as VN group data. With the method of FIG. 3, the port type can be provisioned from the first service provider to the second service provider to support VLAN dynamic provisioning.

FIG. 4 is a flowchart illustrating a method performed by a first service provider according to an embodiment of the disclosure. The method may be applicable to the above second to fourth cases where the first service provider is a UDM or a provision system and the configuration information comprises, for a trunk port in the at least one port, an IP address of a server hosting a list of allowed VLAN ID(s) or blocked VLAN ID(s). As shown, the method comprises blocks 302-304 described above and block 403. At block 302, the first service provider receives, from the service consumer, a first request for providing configuration information related to a VLAN. The configuration information indicates a port type of at least one port related to the VLAN. At block 403, the first service provider obtains the list of allowed VLAN ID(s) or blocked VLAN ID(s) from the server. For example, a request for retrieving the list of allowed VLAN ID(s) or blocked VLAN ID(s) may be sent to the server by using the IP address of the server, so as to obtain the list. At block 304, the first service provider sends, to the second service provider, a second request for providing the configuration information related to the VLAN. The configuration information indicates the port type of the at least one port related to the VLAN. Since the list of allowed VLAN ID(s) or blocked VLAN ID(s) has been obtained from the server, the IP address of the server may be optionally replaced by the obtained list.

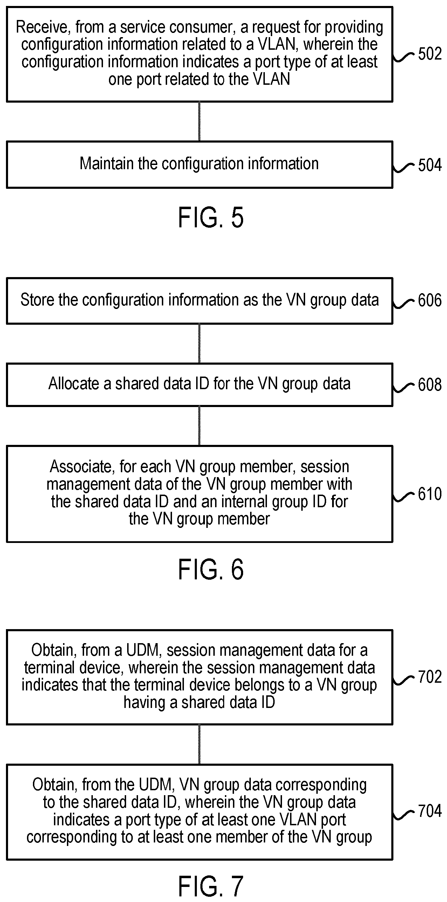

FIG. 5 is a flowchart illustrating a method performed by a UDR according to an embodiment of the disclosure. At block 502, the UDR receives, from a service consumer, a request for providing configuration information related to a VLAN. The configuration information indicates a port type of at least one port related to the VLAN. For example, the service consumer may be a UDM or a provision system. The configuration information may be included in the request as VN group data. For example, there may be three options to indicate the port type. As the first option, the configuration information may comprise, for each of the at least one port, the port type indicating whether the port is an access port or a trunk port. In this first option, the port type is explicitly indicated. As the second option, the configuration information may comprise, for an access port in the at least one port, a first VLAN ID identifying the VLAN. Or the configuration information may comprise, for a trunk port in the at least one port, a second VLAN ID having a predefined value corresponding to trunk port type. In this second option, the port type is implicitly indicated. As the third option, the configuration information may indicate, for a trunk port in the at least one port, a list of allowed VLAN ID(s) which are allowed for Ethernet PDU sessions, or a list of blocked VLAN ID(s) which are rejected for Ethernet PDU sessions. Or an absence of a list of allowed VLAN ID(s) or blocked VLAN ID(s) may indicate access port type. In this third option, the port type is implicitly indicated.

For example, there may be two alternative for the third option. In the first alternative, the configuration information may comprise, for the trunk port in the at least one port, the list of allowed VLAN ID(s) or blocked VLAN ID(s). In this first alternative, the list of allowed VLAN ID(s) or blocked VLAN ID(s) is directly indicated. Optionally, the configuration information may further comprise, for the trunk port in the at least one port, an indicator indicating a usage of the list of allowed VLAN ID(s) or blocked VLAN ID(s). The usage of the list of allowed VLAN ID(s) or blocked VLAN ID(s) may comprise at least one of: authentication, filtering, and configuration. In the second alternative, the configuration information may comprise, for the trunk port in the at least one port, an IP address of a server hosting the list of allowed VLAN ID(s) or blocked VLAN ID(s). In this second alternative, the list of allowed VLAN ID(s) or blocked VLAN ID(s) is indirectly indicated.

At block 504, the UDR maintains the configuration information. For example, block 504 may be implemented as blocks 606-610 of FIG. 6. At block 606, the UDR stores the configuration information as the VN group data. At block 608, the UDR allocates a shared data ID for the VN group data. At block 610, the UDR associates, for each VN group member, session management data of the VN group member with the shared data ID and an internal group ID for the VN group member. Note that in the case where the service consumer is a UDM, the internal group ID may be allocated by the UDR if it is not allocated by the UDM. In the case where the service consumer is a provision system, the internal group ID may be allocated by the UDR. With the method of FIG. 5, it is possible for the UDR to provide to an SMF the configuration information indicating the port type.

FIG. 7 is a flowchart illustrating a method performed by an SMF according to an embodiment of the disclosure. At block 702, the SMF obtains, from a UDM, session management data for a terminal device. The session management data indicates that the terminal device belongs to a VN group having a shared data ID. At block 704, the SMF obtains, from the UDM, VN group data corresponding to the shared data ID. The VN group data indicates a port type of at least one VLAN port corresponding to at least one member of the VN group. For example, the SMF may send a request for obtaining the VN group data to the UDM and receive the VN group data from the UDM. With the method of FIG. 7, the VN group data indicating the port type can be obtained by the SMF so as to control the corresponding PDU sessions.

For example, there may be three options to indicate the port type. As the first option, the VN group data may comprise, for each of the at least one VLAN port, the port type indicating whether the VLAN port is an access port or a trunk port. In this first option, the port type is explicitly indicated. Table 1 below shows an exemplary example of adding a new field in the 5G VN group data to indicate the VLAN port type which can be either a trunk type or access type.

**Table 1: VLAN port type added as a new field of 5G VN group data**

| **External GroupID (for VN group creation)** | **UE GPSI** | **5G VN group data/ config. parameters** | |
|---|---|---|---|
| | | **VLAN port type** | **...** |
| GroupX@dmain.com predefined. Group for VLAN trunk | GPSI#5 | Trunk | |
| Group1@domain.com | GPSI#1 | Access | |
| Group1@domain.com | GPSI#2 | Access | |
| Group2@domain.com | GPSI#3 | Access | |
| Group2@domain.com | GPSI#4 | Access | |

As the second option, the VN group data may comprise, for an access VLAN port in the at least one VLAN port, a first VLAN ID identifying the VLAN. Or the VN group data may comprise, for a trunk VLAN port in the at least one VLAN port, a second VLAN ID having a predefined value corresponding to trunk port type. In this second option, the port type is implicitly indicated. Table 2 below shows an exemplary example of using VLAN ID field in the 5G VN group data to indicate the VLAN port type which can be either a trunk type or access type. As shown, the VLAN ID field can be used as an indication to identify if a port is trunk type or access type. The predefined VLAN ID (e.g. 4094 in Table 2) indicates it is a special VLAN ID value which is only defined for trunk ports. The value of trunk port is not used for VLAN filtering and traffic forwarding, it is only used as an indication of trunk port type.

**Table 2: VLAN port type indicated by VLAN ID field**

| **External GroupID (for VN group creation)** | **UE GPSI** | **5G VN group data/ config. parameters** | |
|---|---|---|---|
| | | **VLAN ID** | **...** |
| Group4094@dmain.com predefined. Group for VLAN trunk | GPSI#5 | predefined for trunk, e.g. #4094 | |
| Group1@domain.com | GPSI#1 | #100 | |
| Group1@domain.com | GPSI#2 | #100 | |
| Group2@domain.com | GPSI#3 | #200 | |
| Group2@domain.com | GPSI#4 | #200 | |

As the third option, the VN group data may indicate, for a trunk VLAN port in the at least one VLAN port, a list of allowed VLAN ID(s) which are allowed for Ethernet PDU sessions, or a list of blocked VLAN ID(s) which are rejected for Ethernet PDU session. Or an absence of a list of allowed VLAN ID(s) or blocked VLAN ID(s) may indicate access port type. In this third option, the port type is implicitly indicated.

For example, there may be two alternative for the third option. In the first alternative, the VN group data may comprise, for the trunk VLAN port, the list of allowed VLAN ID(s) or blocked VLAN ID(s). In this first alternative, the list of allowed VLAN ID(s) or blocked VLAN ID(s) is directly indicated. Optionally, the VN group data may further comprise, for the trunk VLAN port, an indicator indicating a usage of the list of allowed VLAN ID(s) or blocked VLAN ID(s). The usage of the list of allowed VLAN ID(s) or blocked VLAN ID(s) may comprise at least one of: authentication, filtering, and configuration. In the second alternative, the VN group data may comprise, for the trunk VLAN port, an IP address of a server hosting the list of allowed VLAN ID(s) or blocked VLAN ID(s). In this second alternative, the list of allowed VLAN ID(s) or blocked VLAN ID(s) is indirectly indicated.

Table 3 below shows an exemplary example of using VLAN list field in the 5G VN group data to indicate the VLAN port type which can be either a trunk type or access type. As shown, for trunk port, the presence of VLAN list field indicates the trunk type. The VID field of trunk can be either a Default VLAN (e.g. VID#1 which is normally used for management purpose, or used as a default VID assigned for those untagged inbound frames). For access type ports, there is no presence of allowed/blocked VLAN list.

**Table 3: VLAN port type indicated by VLAN list field**

| **External GroupID (for VN group creation)** | **UE GPSI** | **5G VN group data/ config. parameters** | |
|---|---|---|---|
| | | **VLAN ID** | **VLAN list** |
| Group4094@dmain.com | GPSI#5 | None or Default (e.g., VID#1) | Allowed (whitelist) for filtering or Blocked (blacklist) for filtering or Allowed (whitelist) for configuration |
| Group1@domain.com | GPSI#1 | #100 | |
| Group1@domain.com | GPSI#2 | #100 | |
| Group2@domain.com | GPSI#3 | #200 | |
| Group2@domain.com | GPSI#4 | #200 | |

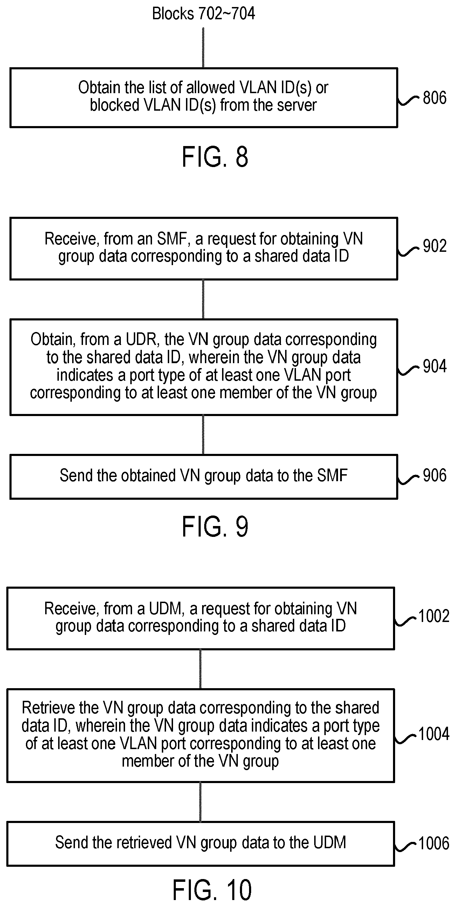

FIG. 8 is a flowchart illustrating a method performed by an SMF according to an embodiment of the disclosure. The method may be applicable to the case where the VN group data comprises, for a trunk VLAN port in the at least one VLAN port, an IP address of a server hosting the list of allowed VLAN ID(s) or blocked VLAN ID(s). As shown, the method comprises blocks 702-704 described above and block 806. At block 702, the SMF obtains, from a UDM, session management data for a terminal device. The session management data indicates that the terminal device belongs to a VN group having a shared data ID. At block 704, the SMF obtains, from the UDM, VN group data corresponding to the shared data ID. The VN group data indicates a port type of at least one VLAN port corresponding to at least one member of the VN group. At block 806, the SMF obtains the list of allowed VLAN ID(s) or blocked VLAN ID(s) from the server. For example, a request for retrieving the list of allowed VLAN ID(s) or blocked VLAN ID(s) may be sent to the server by using the IP address of the server, so as to obtain the list.

FIG. 9 is a flowchart illustrating a method performed by a UDM according to an embodiment of the disclosure. At block 902, the UDM receives, from an SMF, a request for obtaining VN group data corresponding to a shared data ID. At block 904, the UDM obtains, from a UDR, the VN group data corresponding to the shared data ID. The VN group data indicates a port type of at least one VLAN port corresponding to at least one member of the VN group. For example, the UDM may send a request for obtaining the VN group data to the UDR and receive the VN group data from the UDR.

For example, there may be three options to indicate the port type. As the first option, the VN group data may comprise, for each of the at least one VLAN port, the port type indicating whether the VLAN port is an access port or a trunk port. In this first option, the port type is explicitly indicated. As the second option, the VN group data may comprise, for an access VLAN port in the at least one VLAN port, a first VLAN ID identifying the VLAN. Or the VN group data may comprise, for a trunk VLAN port in the at least one VLAN port, a second VLAN ID having a predefined value corresponding to trunk port type. In this second option, the port type is implicitly indicated. As the third option, the VN group data may indicate, for a trunk VLAN port in the at least one VLAN port, a list of allowed VLAN ID(s) which are allowed for Ethernet PDU sessions, or a list of blocked VLAN ID(s) which are rejected for Ethernet PDU session. Or an absence of a list of allowed VLAN ID(s) or blocked VLAN ID(s) may indicate access port type. In this third option, the port type is implicitly indicated.

For example, there may be two alternative for the third option. In the first alternative, the VN group data may comprise, for the trunk VLAN port, the list of allowed VLAN ID(s) or blocked VLAN ID(s). In this first alternative, the list of allowed VLAN ID(s) or blocked VLAN ID(s) is directly indicated. Optionally, the VN group data may further comprise, for the trunk VLAN port, an indicator indicating a usage of the list of allowed VLAN ID(s) or blocked VLAN ID(s). The usage of the list of allowed VLAN ID(s) or blocked VLAN ID(s) may comprise at least one of: authentication, filtering, and configuration. In the second alternative, the VN group data may comprise, for the trunk VLAN port, an IP address of a server hosting the list of allowed VLAN ID(s) or blocked VLAN ID(s). In this second alternative, the list of allowed VLAN ID(s) or blocked VLAN ID(s) is indirectly indicated.

At block 906, the UDM sends the obtained VN group data to the SMF. With the method of FIG. 9, the VN group data indicating the port type can be provided to the SMF so as to control the corresponding PDU sessions.

FIG. 10 is a flowchart illustrating a method performed by a UDR according to an embodiment of the disclosure. At block 1002, the UDR receives, from a UDM, a request for obtaining VN group data corresponding to a shared data ID. At block 1004, the UDR retrieves the VN group data corresponding to the shared data ID. The VN group data indicates a port type of at least one VLAN port corresponding to at least one member of the VN group.

For example, there may be three options to indicate the port type. As the first option, the VN group data may comprise, for each of the at least one VLAN port, the port type indicating whether the VLAN port is an access port or a trunk port. In this first option, the port type is explicitly indicated. As the second option, the VN group data may comprise, for an access VLAN port in the at least one VLAN port, a first VLAN ID identifying the VLAN. Or the VN group data may comprise, for a trunk VLAN port in the at least one VLAN port, a second VLAN ID having a predefined value corresponding to trunk port type. In this second option, the port type is implicitly indicated. As the third option, the VN group data may indicate, for a trunk VLAN port in the at least one VLAN port, a list of allowed VLAN ID(s) which are allowed for Ethernet PDU sessions, or a list of blocked VLAN ID(s) which are rejected for Ethernet PDU session. Or an absence of a list of allowed VLAN ID(s) or blocked VLAN ID(s) may indicate access port type. In this third option, the port type is implicitly indicated.

For example, there may be two alternative for the third option. In the first alternative, the VN group data may comprise, for the trunk VLAN port, the list of allowed VLAN ID(s) or blocked VLAN ID(s). In this first alternative, the list of allowed VLAN ID(s) or blocked VLAN ID(s) is directly indicated. Optionally, the VN group data may further comprise, for the trunk VLAN port, an indicator indicating a usage of the list of allowed VLAN ID(s) or blocked VLAN ID(s). The usage of the list of allowed VLAN ID(s) or blocked VLAN ID(s) may comprise at least one of: authentication, filtering, and configuration. In the second alternative, the VN group data may comprise, for the trunk VLAN port, an IP address of a server hosting the list of allowed VLAN ID(s) or blocked VLAN ID(s). In this second alternative, the list of allowed VLAN ID(s) or blocked VLAN ID(s) is indirectly indicated.

At block 1006, the UDR sends the retrieved VN group data to the UDM. With the method of FIG. 10, it is possible to provide the VN group data indicating the port type to an SMF so as to control the corresponding PDU sessions.

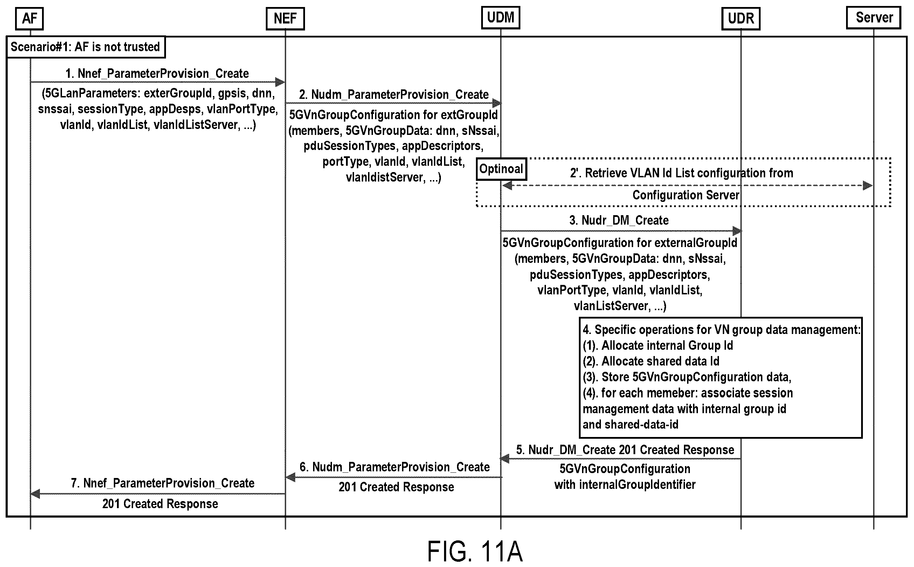

FIGs. 11A-11B are flowcharts illustrating exemplary processes according to an embodiment of the disclosure. As shown, the processes involve five entities: an AF, an NEF, a UDM, a UDR and a server. In the processes, the AF provision VLAN configuration data for a VN Group. FIG. 11A corresponds to a first scenario where the AF is not trusted. At step 1, the AF initiates a hypertext transfer protocol (HTTP) POST request to the NEF for the "5GLAN Parameters Provision Subscriptions" resource. The body of the HTTP POST message includes the 5G LAN service-related parameters within the "5gLanParams" attribute. The 5GLanParameters is extended with the following new attributes in order to provision VLAN configuration data.

The first parameter is vlanPortType, which is used to indicate the port type of ACCESS or TRUNK. If not present then it can be implicitly deduced from presence of the vlanldList attribute. If the vlanldList attribute is not present, then the port type is Access.

The second parameter is vlanld, which may be the VLAN identifier used for VLAN configuration of an access port (i.e. if port type is Access), or the predefined VLAN identifier used if port type is Trunk.

The third parameter is vlanldList, which may be a VLAN identifier list having an application programming interface (API) structure of map. It could be allowed VLAN identifier list or blocked VLAN identifier list. For whitelist, it could be further indicated the VLAN list usage type, e.g. for authentication/filtering (allowed/filtering) or for configuration. Alternatively, an IP address of a server which hosts the VLAN list information could be provided.

As an exemplary example, the 5GLanParameters protocol payload extended (the part highlighted with underlines is the extension) with VLAN configuration is shown in Table 4 below. The vlanldentifier is of Type integer with 1..4094 as range. The vlanldenfierList is an array of Vlanldentifier or range of Vlanldentifier. The VlanPortType is enumeration of ACCESS and TRUNK. The vlanldListServer is the IP address of the server which hosts the VLAN Identifier list information.

**Table 4: 5GLanParameters attribute**

| **Attribute name** | **Data type** | **P** | **Cardinality** | **Description** | |
|---|---|---|---|---|---|
| exterGroupId | ExternalGroupId | M | 1 | Identifies an 5G Virtual Network Group. | |
| gpsis | map(Gpsi) | M | 1..N | Represents the list of 5G VN Group members, each member is identified by GPSI. | |
| | | | | Any string value can be used as a key of the map. | |
| dnn | Dnn | M | 1 | DNN for the 5G VN group, a full DNN with both the Network Identifier and Operator Identifier, or a DNN with the Network Identifier only. | |
| aaalpv4Addr | Ipv4Addr | O | 1 | Identifies the DN-AAA server IPv4 address provided by AF, for the secondary authentication/authorization and/or UE IP address allocation by DN-AAA server. | |
| aaalpv6Addr | Ipv6Addr | O | 1 | Identifies the DN-AAA server IPv6 address provided by AF, for the secondary authentication/authorization and/or UE IP address allocation by DN-AAA server. | |
| aaaUsgs | array(AaaUsage) | O | 1..2 | Identifies the usage needs for secondary authentication/authorization and/or UE IP address allocation from the DN-AAA server. | |
| mtcProviderld | MtcProviderinformation | O | 0..1 | Indicates MTC provider information for 5G VN Group Configuration authorization. (NOTE) | |
| snssai | Snssai | M | 1 | S-NSSAI for the 5G VN group. | |
| session Type | PduSessionType | M | 1 | PDU Session Type allowed for 5G VN group. | |
| appDesps | map(AppDescriptor) | M | 1..N | Describes the operation systems and the corresponding applications for each operation systems. The key of map is osld. | |
| vlanPortType | VlanPortType | O | 0..1 | Identifies the VLAN Port Type: ACCESS or TRUNK | |
| | | | | If not present. shall be implicitly determined by the presence of vlanldList or vlanldListServer: | |
| | | | | | - vlanldList/vlanldListServer not present: ACCESS |
| | | | | | - vlanldList/vlanldListServer present: TRUNK |
| vlanId | VlanIdentifier | C | 0..1 | VLAN identifier of the access port or predefined VLAN identifier of the trunk port | |
| | | | | VID is mandatory, if PDU type is Ethernet, and/or support VLAN dynamic group management | |
| vlanldList | map(VlanIdentifierList) | O | 0..N | Identifies a blacklist or whitelist for VLAN identifier: | |
| | | | | - "Allowed" served as the key for whitelist | |
| | | | | - "Blocked" served as the key for blacklist | |
| | | | | - "Configured" served as the key for configuration list | |
| vlanldListServer | IpAddress | O | 0..1 | IP address of server hosts the VLAN identifier list, present only if it is TRUNK port and vlanldList is not present | |

At step 2, upon receipt of the corresponding HTTP POST message, if the AF is authorized by the NEF to provision the parameters, the NEF interacts with the UDM to create a subscription at the UDM by using Nudm_ParameterProvision service. The NEF sends a request to the UDM to create a 5G VN Group. The request contains the group's external identifier and the group configuration. The 5GVnGroupData is extended with the following attributes in order to provision VLAN configuration data: vlanPortType, vlanld, vlanldList, and vlanldListServer (for description of those attributes, see the descriptions in step 1).

As an exemplary example, the 5GVnGroupData protocol payload extended (the part highlighted with underlines is the extension) with VLAN configuration is shown in Table 5 below. The vlanldentifier is of Type integer with 1..4094 as range. The vlanldenfifierList is an array of Vlanldentifier. The VlanPortType is enumeration of ACCESS and TRUNK.

**Table 5: 5GVnGroupData attribute**

| **Attribute name** | **Data type** | **P** | **Cardinality** | **Description** | |
|---|---|---|---|---|---|
| dnn | Dnn | M | 1 | DNN of the 5G VN group, shall contain the Network Identifier only. | |
| sNssai | Snssai | M | 1 | S-NSSAI of the 5G VN group's communication session | |
| pduSessionTypes | array(PduSessionType) | O | 1..N | List of PDU Session Types allowed for 5G VN group's communication session | |
| appDescriptors | array(AppDescriptor) | O | 1..N | List of Application Descriptors allowed for 5G VN group's communication session | |
| secondaryAuth | boolean | O | 0..1 | Indicates whether secondary authentication and authorization is needed. | |
| | | | | true: secondary authentication and authorization is needed. | |
| | | | | false: secondary authentication and authorization is not needed. | |
| | | | | If absent, it indicates that secondary authentication is not required by the NEF, but it still may be required by local policies at the SMF. | |
| dnAaaAddress | IpAddress | O | 0..1 | The IP address of the DN-AAA server, used for secondary authentication and authorization. | |
| additionalDnAaaAddres ses | array(IpAddress) | O | 1..N | Additional IP addresses of the DN-AAA server used for secondary authentication and authorization. | |
| dnAaaFqdn | Fqdn | O | 0..1 | The FQDN of the DN-AAA server used for secondary authentication and authorization. | |
| vlanPortType | VlanPortType | O | 0..1 | Identifies the VLAN Port Type: ACCESS or TRUNK | |
| | | | | If not present, shall be implicitly determined by the presence vlanldList or vlanldListServer: | |
| | | | | | - vlanldList/ vlanldListServer not present: ACCESS |
| | | | | | - vlanldList/ vlanldListServer present: TRUNK |
| vlanId | VlanIdentifier | C | 0..1 | VLAN identifier of the access port or predefined VLAN identifier of the trunk port | |
| | | | | VID is mandatory, if PDU type is Ethernet, and/or support VLAN dynamic group management | |
| vlanldList | map(VlanIdentifie rList) | O | 0.. N | Identifies a blacklist or whitelist for VLAN identifier: | |
| | | | | - "Allowed" served as the key for whitelist | |
| | | | | - "Blocked" served as the key for blacklist | |
| | | | | - "Configured" served as the key for configuration list | |
| vlanIdListServer | IpAddress | O | 0..1 | IP address of server hosts the VLAN identifier list, present only if it is TRUNK port and vlanldList is not present, see NOTE | |

Note that if access type is determined to be of TRUNK type and vlanldList attribute is not present, but vlanldListServer server is present, there is an optional step 2' for the UDM to retrieve the VLAN Id list configuration data from the designated configuration server.

At step 3, the UDM sends a request to the UDR to create a 5G VN Group. The request contains the group's external identifier and the group configuration. Similarly, the 5GVnGroupConfiguration on Nudr interface is extended with the following attributes in order to provision VLAN configuration data: vlanPortType, vlanld, vlanldList, and vlanldListServer (for description of those attributes, see the descriptions in Step 1). One exemplary example of the 5GVnGroupData protocol payload extended with VLAN configuration is shown in step 2.

At step 4, upon receipt of the corresponding message from the UDM to create a 5G VN Group, as an exemplary example, the UDR would execute below specific logics. At the first substep, the UDR stores 5GVnGroupConfiguration data with the few extended attributes mentioned above for VLAN configuration. At the second substep, the UDR allocates internal Group Id if not allocated by the UDM yet for the group identified by the external group identifier, and stores the mapping between internal group id and external group Id. At the third substep, the UDR allocates shared data Id for VN Group data. At the fourth substep, for each member indicated in the 5GVnGroupConfiguration for the VN group, the UDR associates the session management data with internal group id and shared-data-id pointing to the VN group data.

At step 5, the UDR informs the UDM with a successful response, and the internal group identifier is retuned in the response. At step 6, the UDM informs the NEF with a successful response. At step 7, the NEF informs the AF with a successful response.

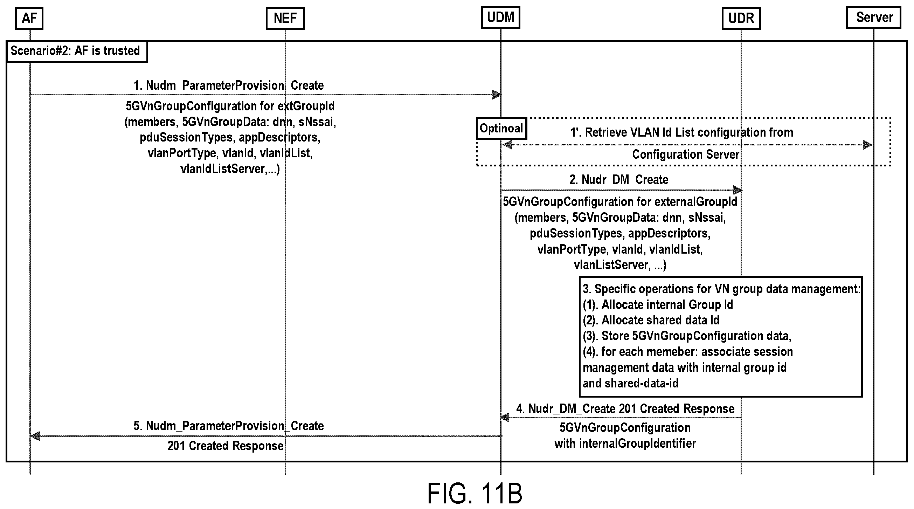

FIG. 11B corresponds to a second scenario where the AF is trusted. At step 1, the AF sends a request to the UDM to create a 5G VN Group. The request contains the group's external identifier and the group configuration. The 5GVnGroupConfiguration is extended with the following attributes in order to provision VLAN configuration data: vlanPortType, vlanld, vlanldList, and vlanldListServerAddress (for description of those attributes, see the descriptions in Step 1 of the first scenario). Note that if access type is determined to be of TRUNK type and vlanldList attribute is not present, but vlanldListServer server is present, there is an optional step 1' for the UDM to retrieve the VLAN Id list configuration data from the designated configuration server.

At step 2, the UDM sends a request to the UDR to create a 5G VN Group. The request contains the group's external identifier and the group configuration. Similarly, the 5GVnGroupConfiguration on Nudr interface is extended with the following attributes in order to provision VLAN configuration data: vlanPortType, vlanld, vlanldList, and vlanldListServerAddress (for description of those attributes, see the descriptions in step 1 of the first scenario).

At step 3, upon receipt of the corresponding message from the UDM to create a 5G VN Group, the UDR executes the following specific logics. At the first substep, the UDR allocates internal Group Id if not allocated by the UDM yet for the group identified by the external group identifier, and stores the mapping between internal group id and external group Id. At the second substep, the UDR allocates shared data Id for 5G VN Group data. At the third substep, the UDR stores 5GVnGroupConfiguration data with the few extended attributes mentioned above for VLAN configuration. At the fourth substep, for each member indicated in the 5GVnGroupConfiguration for the VN group, the UDR associates the session management data with internal group id and shared-data-id point to the VN group data.

At step 4, the UDR informs the UDM with a successful response, and the internal group identifier is retuned in the response. At step 5, the UDM informs the AF with a successful response.

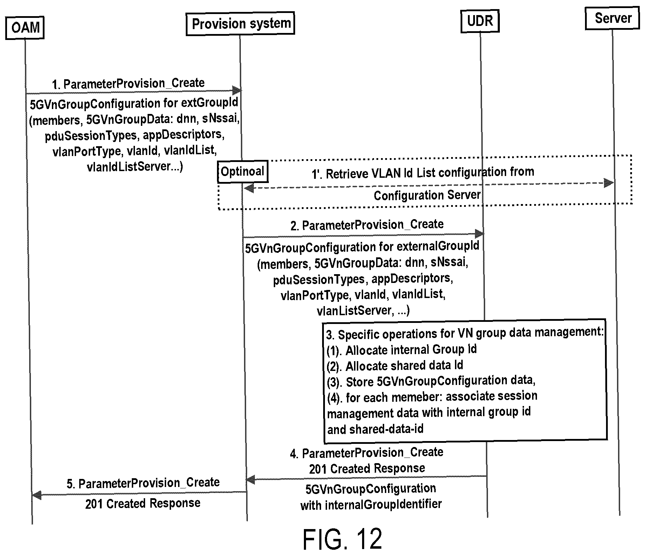

FIG. 12 is a flowchart illustrating an exemplary process according to an embodiment of the disclosure. In the process, OAM administrator provisions VLAN configuration data for a VN group to support ethernet based 5G-LAN type service. As shown, the process involves four entities: an OAM, a provision system, a UDR and a server. At step 1, an OAM administrator sends a parameter provisioning request to the provisioning system to create a 5G VN Group. The request contains the group's external identifier and the group configuration. The 5GVnGroupConfiguration is extended with the following attributes in order to provision VLAN configuration data: portType, vlanld, vlanldList, and vlanldListServer (for description of those attributes, see the description in step 1 of the first scenario in FIG. 11A).

At step 2, the provisioning system sends a request to the UDR to create a 5G VN Group. The request contains the group's external identifier and the group configuration. Similarly, the 5GVnGroupConfiguration on Nudr interface is extended with the following attributes in order to provision VLAN configuration data: portType, vlanld, vlanldList, and vlanldListServer (for description of those attributes, see the description in step 1 of the first scenario in FIG. 11A). Note that if access type is determined to be of TRUNK type and vlanldList attribute is not present, but vlanldListServer server is present, there is an optional step 1' for the provisioning system to retrieve the VLAN Id list configuration data from the designated configuration server.

At step 3, upon receipt of the corresponding message from the provisioning system to create a 5G VN Group, the UDR executes the following specific logics. At the first substep, the UDR allocates internal Group Id for the group identified by the external group identifier, and stores the mapping between internal group id and external group Id. At the second substep, the UDR allocates shared data Id for 5G VN Group data. At the third substep, the UDR stores 5GVnGroupConfiguration data with the few extended attributes mentioned above for VLAN configuration. At the fourth substep, for each member indicated in the 5GVnGroupConfiguration for the VN group, the UDR associates the session management data with internal group id and shared-data-id point to the VN group data.

At step 4, the UDR informs the provisioning system with a successful response. At step 5, the provisioning system informs the OAM administrator with a successful response.

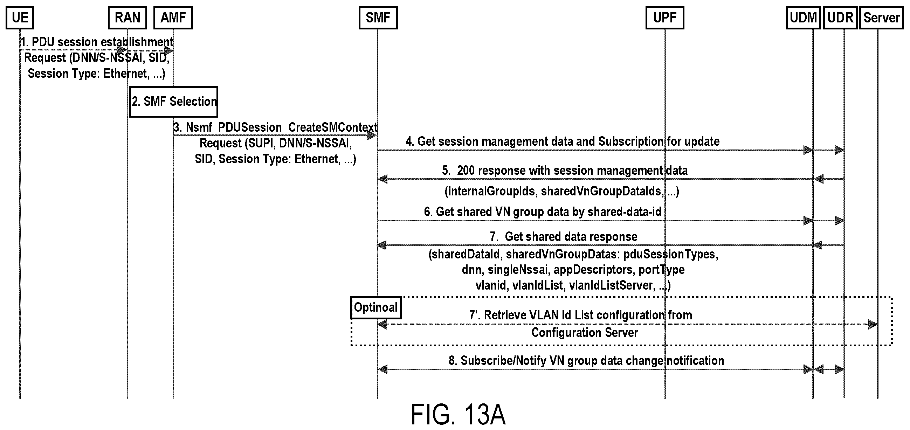

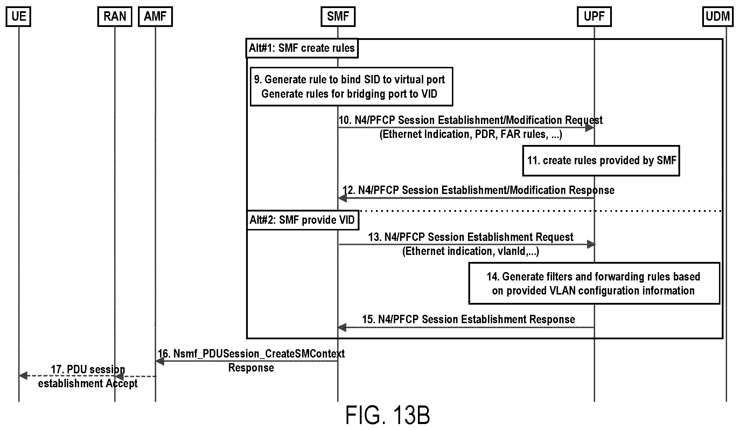

FIGs. 13A-13B are flowcharts illustrating an exemplary process according to an embodiment of the disclosure. As shown, the process involves eight entities: a UE, a RAN, an AMF, an SMF, a UPF, a UDM, a UDR and a server. In the process, PDU session establishment/modification based on VLAN configuration data is performed for ethernet PDU sessions. The provisioned shared VN group data could be retrieved from UDM and based on the VLAN configuration data in the VN group data. The N4/PFCP session establishment/modification procedure is enhanced.

At step 1, the UE initiates the UE Requested PDU Session Establishment procedure by the transmission of a non-access stratum (NAS) message containing a PDU Session Establishment Request within the N1 session management (SM) container. The PDU Session Establishment Request includes a PDU session ID, Requested PDU Session Type, a Requested SSC mode, 5GSM Capability, PCO, SM PDU DN Request Container, [Number Of Packet Filters], [Header Compression Configuration], UE Integrity Protection Maximum Data Rate, [Always-on PDU Session Requested], [RSN] and [PDU Session Pair ID].

At step 2, the AMF selects an SMF. At step 3, if the AMF does not have an association with an SMF for the PDU Session ID provided by the UE (e.g. when Request Type indicates "initial request"), the AMF invokes the Nsmf_PDUSession_ CreateSMContext Request, but if the AMF already has an association with an SMF for the PDU Session ID provided by the UE (e.g. when Request Type indicates "existing PDU Session"), the AMF invokes the Nsmf_PDUSession_UpdateSMContext Request.

At step 4, if Session Management Subscription data for corresponding SUPI, DNN and S-NSSAI of the HPLMN is not available, then SMF retrieves the Session Management Subscription data using Nudm_SDM_Get (SUPI, Session Management Subscription data, selected DNN, S-NSSAI of the HPLMN, Serving PLMN ID, [NID]) and subscribes to be notified when this subscription data is modified using Nudm_SDM_Subscribe (SUPI, Session Management Subscription data, selected DNN, S-NSSAI of the HPLMN, Serving PLMN ID, [NID]). UDM may get this information from UDR by Nudr_DM_Query (SUPI, Subscription Data, Session Management Subscription data, selected DNN, S-NSSAI of the HPLMN, Serving PLMN ID, [NID]) and may subscribe to notifications from UDR for the same data by Nudr_DM_subscribe.

At step 5, SMF supports VN group data handling could indicate its support of SharedData feature to UDM. At step 6, UDR sends UDM with the session management subscription data for the UE. The UDR allocated internal group Id the UE belongs to is returned, meanwhile a shared data id pointing to the VN Group data is also returned. UDM further sends the session management data to SMF.

At step 6, SMF check the received session management data and finds that the UE belongs to a group identified by the internal group id and associated shared data id for the VN group data. SMF retrieves the shared data for the VN group by shared data id from UDM. UDM further retrieves it from UDR.

At step 7, UDR sends UDM the shared data for the VN group. As discussed before, VLAN configuration for the VN group is also returned in the VN group data. UDM further sends the VN group data with VLAN configuration contained to SMF. An exemplary example of the shared VnGroupData extended (the part highlighted with underlines is the extension) with VLAN configuration is shown in Table 6 below. The vlanldentifier is of Type integer with 1..4094 as range. The vlanldenfifierList is an array of Vlanldentifier or a range of Vlanldentifier. The VlanPortType is enumeration of ACCESS and TRUNK. The vlanldListServer is the IP address of the server which hosts the VLAN Identifier list information.

**Table 6: VnGroupData attribute**

| **Attribute name** | **Data type** | **P** | **Cardinality** | **Description** | |
|---|---|---|---|---|---|
| pduSessionTypes | PduSessionTypes | O | 0..1 | Allowed session types | |
| dnn | Dnn | O | 0..1 | Data Network Name with Network Identifier only. (NOTE) | |
| singleNssai | Snssai | O | 0..1 | Single Nssai | |
| appDescriptors | arrav(AppDescriptor) | O | 1..N | List of Application Descriptors | |
| vlanPortType | VlanPortType | O | 0..1 | Identifies the VLAN Port Type: ACCESS or TRUNK | |
| | | | | If not present, shall be implicitly determined by the presence vlanIdList or vlanIdListServer: | |
| | | | | | - vlanIdList/ vlanIdListServer not present: ACCESS |
| | | | | | - vlanIdList/ vlanIdListServer present: TRUNK |
| vlanId | Vlanldentifier | C | 0..1 | VLAN identifier of the access port or predefined VLAN identifier of the trunk port | |
| | | | | VID is mandatory, if PDU type is Ethernet, and/or support VLAN dynamic group management | |
| vlanIdList | map(VlanIdentifierLis t) | O | 0.. N | Identifies a blacklist or whitelist for VLAN identifier: | |
| | | | | - "Allowed" served as the key for whitelist | |
| | | | | - "Blocked" served as the key for blacklist | |
| | | | | - "Configured" served as the key for configuration | |
| vlanIdListServer | IpAddress | O | 0..1 | IP address of server hosts the VLAN identifier list, present only if it is TRUNK port and vlanldList is not present, see NOTE | |
| NOTE: Only a 1:1 mapping between DNN and 5G VN group is supported in this release | | | | | |

Note that if access type is determined to be of TRUNK type and vlanldList attribute is not present, but vlanldListServer server is present, there is an optional step 7' for SMF to retrieve the VLAN Id list configuration data from the designated configuration server.

At step 8, SMF may subscribe the data change notification for VN group data through UDM to UDR, if there are VLAN configuration data changes. The changed VLAN configuration will be notified to SMF, so SMF can keep informed of the VLAN configuration changes for the VN group.

Then, SMF decides how to control the ethernet PDU session establishment towards UPF. There are two alternatives. In the first alternative (steps 9-12), SMF creates packet detection, forwarding rules and other rules based on VLAN configuration data for UPF and sends to UPF in the N4/PFCP session establishment/modification message. At step 9, SMF generates rule to bind SID to the virtual port, generates rules for bridging the virtual port to the VID, creates packet detection, forwarding rules and other rules (e.g. URR, QER, etc.). At step 10, SMF sends UPF the N4/PFCP session establishment/modification message including the PDR, FAR and other rules for the PDU session. At step 11, UPF processes the session establish/modification request, creates the rules provided by SMF. At step 12, UPF sends AMF the N4/PFCP session establishment/modification response.

In the second alternative (steps 13-15), SMF just provides the VLAN configuration information to UPF and UPF will filter and forward frames based on the informed VLAN configuration information from SMF. At step 13, SMF provides UPF the VLAN configuration in the N4/PFCP session establishment/modification message. At step 14, UPF generates rule to bind SID to the virtual port, generates rules for bridging the virtual port to the VID, generates filtering and forwarding rules (e.g. PDR and FAR) based on the provided VLAN configuration information. At step 15, UPF sends AMF the N4/PFCP session establishment/modification response.

At step 16, SMF sends AMF the PDU session establishment response. At step 17, AMF sends UE the result of the PDU session establishment.

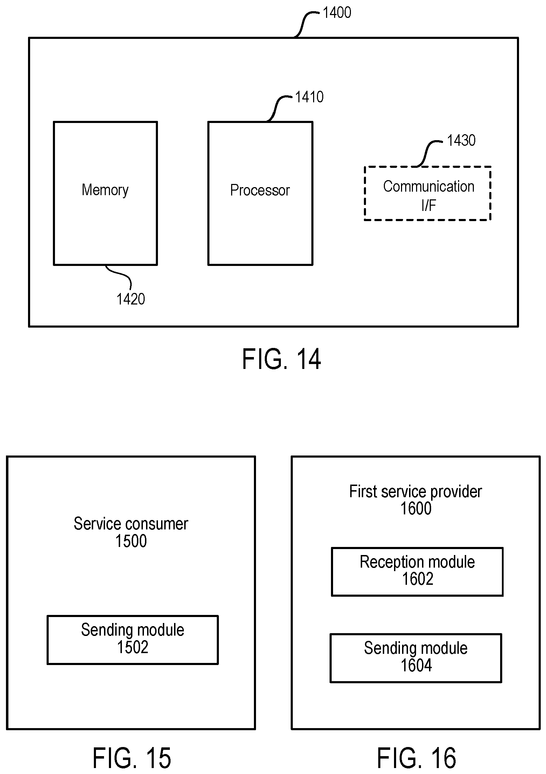

FIG. 14 is a block diagram showing an apparatus suitable for use in practicing some embodiments of the disclosure. For example, any one of the service consumer, the first service provider, the UDR, the SMF and the UDM described above may be implemented through the apparatus 1400. As shown, the apparatus 1400 may include a processor 1410, a memory 1420 that stores a program, and optionally a communication interface 1430 for communicating data with other external devices through wired and/or wireless communication.

The program includes program instructions that, when executed by the processor 1410, enable the apparatus 1400 to operate in accordance with the embodiments of the present disclosure, as discussed above. That is, the embodiments of the present disclosure may be implemented at least in part by computer software executable by the processor 1410, or by hardware, or by a combination of software and hardware.

The memory 1420 may be of any type suitable to the local technical environment and may be implemented using any suitable data storage technology, such as semiconductor based memory devices, flash memories, magnetic memory devices and systems, optical memory devices and systems, fixed memories and removable memories. The processor 1410 may be of any type suitable to the local technical environment, and may include one or more of general purpose computers, special purpose computers, microprocessors, digital signal processors (DSPs) and processors based on multi-core processor architectures, as non-limiting examples.

FIG. 15 is a block diagram showing a service consumer according to an embodiment of the disclosure. As shown, the service consumer 1500 comprises a sending module 1502 which may be configured to send, to a service provider, a request for providing configuration information related to a VLAN. The configuration information may indicates a port type of at least one port related to the VLAN.

FIG. 16 is a block diagram showing a first service provider according to an embodiment of the disclosure. As shown, the first service provider 1600 comprises a reception module 1602 and a sending module 1604. The reception module 1602 may be configured to receive, from a service consumer, a first request for providing configuration information related to a VLAN. The configuration information may indicate a port type of at least one port related to the VLAN. The sending module 1604 may be configured to send, to a second service provider, a second request for providing the configuration information related to the VLAN. The configuration information may indicate the port type of the at least one port related to the VLAN.

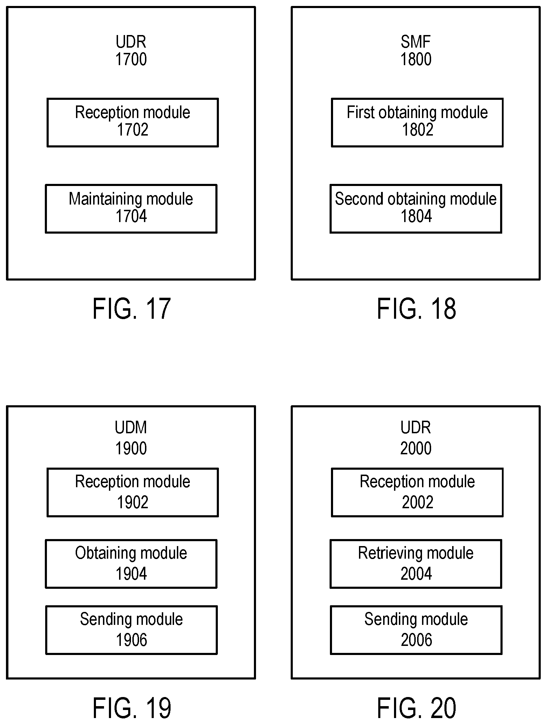

FIG. 17 is a block diagram showing a UDR according to an embodiment of the disclosure. As shown, the UDR 1700 comprises a reception module 1702 and a maintaining module 1704. The reception module 1702 may be configured to receive, from a service consumer, a request for providing configuration information related to a VLAN. The configuration information may indicate a port type of at least one port related to the VLAN. The maintaining module 1704 may be configured to maintain the configuration information.

FIG. 18 is a block diagram showing an apparatus implementing an SMF according to an embodiment of the disclosure. As shown, the apparatus 1800 comprises a first obtaining module 1802 and a second obtaining module 1804. The first obtaining module 1802 may be configured to obtain, from a UDM, session management data for a terminal device. The session management data may indicate that the terminal device belongs to a VN group having a shared data ID. The second obtaining module 1804 may be configured to obtain, from the UDM, VN group data corresponding to the shared data ID. The VN group data may indicate a port type of at least one VLAN port corresponding to at least one member of the VN group.

FIG. 19 is a block diagram showing an apparatus implementing a UDM according to an embodiment of the disclosure. As shown, the apparatus 1900 comprises a reception module 1902, an obtaining module 1904 and a sending module 1906. The reception module 1902 may be configured to receive, from an SMF, a request for obtaining VN group data corresponding to a shared data ID. The obtaining module 1904 may be configured to obtain, from a UDR, the VN group data corresponding to the shared data ID. The VN group data may indicate a port type of at least one VLAN port corresponding to at least one member of the VN group. The sending module 1906 may be configured to send the obtained VN group data to the SMF.

FIG. 20 is a block diagram showing a UDR according to an embodiment of the disclosure. As shown, the UDR 2000 comprises a reception module 2002, a retrieving module 2004 and a sending module 2006. The reception module 2002 may be configured to receive, from a UDM, a request for obtaining VN group data corresponding to a shared data ID. The retrieving module 2004 may be configured to retrieve the VN group data corresponding to the shared data ID. The VN group data may indicate a port type of at least one VLAN port corresponding to at least one member of the VN group. The sending module 2006 may be configured to send the retrieved VN group data to the UDM. The modules described above may be implemented by hardware, or software, or a combination of both.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments. In addition, the function may be embodied in whole or in part in firmware or hardware equivalents such as integrated circuits, field programmable gate arrays (FPGA), and the like.

The scope of the present invention is defined in the following appended claims.

## Claims

1. A method performed by a unified data repository, UDR, of a Fifth Generation System , 5GS, that provides Ethernet bridging operations for User Equipments ,UEs, acting as Ethernet access ports or Ethernet trunk ports, said method comprising the steps of :
receiving (502), from a service consumer, a request for providing configuration information related to a virtual local area network, VLAN, wherein the configuration information indicates a port type of at least one port related to the VLAN; and
maintaining (504) the configuration information;
wherein the configuration information is included in the request as virtual network, VN, group data; and,
wherein the step of maintaining (504) the configuration information comprises the steps of:
storing (606) the configuration information as the VN group data;
allocating (608) a shared data identifier, ID, for the VN group data; and
associating (610), for each VN group member, session management data of the VN group member with the shared data ID and an internal group ID for the VN group member.

2. The method according to claim 1, wherein the internal group ID is allocated by the UDR and, the service consumer is a unified data management, UDM, or a provision system.

3. The method according to any of claims 1 to 2, wherein the configuration information comprises, for each of the at least one port, the port type indicating whether the port is an access port or a trunk port;
wherein the configuration information comprises, for an access port in the at least one port, a first VLAN ID identifying the VLAN; or
wherein the configuration information comprises, for a trunk port in the at least one port, a second VLAN ID having a predefined value corresponding to trunk port type.

4. The method according to any of claims 1 to 3, wherein the configuration information indicates, for a trunk port in the at least one port, a list of allowed VLAN ID(s) which are allowed for Ethernet protocol data unit, PDU, sessions, or a list of blocked VLAN ID(s) which are rejected for Ethernet PDU sessions; or
wherein an absence of a list of allowed VLAN ID(s) or blocked VLAN ID(s) indicates access port type.

5. The method according to claim 4, wherein the configuration information comprises, for the trunk port in the at least one port, the list of allowed VLAN ID(s) or blocked VLAN ID(s);
wherein the configuration information further comprises, for the trunk port in the at least one port, an indicator indicating a usage of the list of allowed VLAN ID(s) or blocked VLAN ID(s);
wherein the usage of the list of allowed VLAN ID(s) or blocked VLAN ID(s) comprises at least one of: authentication, filtering, and configuration;
wherein the configuration information comprises, for the trunk port in the at least one port, an Internet protocol, IP, address of a server hosting the list of allowed VLAN ID(s) or blocked VLAN ID(s).

6. A method performed by a session management function, SMF, of a Fifth Generation System , 5GS, that provides Ethernet bridging operations for User Equipments ,UEs, acting as Ethernet access ports or Ethernet trunk ports, said method comprising the steps of :
obtaining (702), from a unified data management, UDM, session management data for a terminal device, wherein the session management data indicates that the terminal device belongs to a virtual network, VN, group having a shared data ID; and
obtaining (704), from the UDM, VN group data corresponding to the shared data ID, wherein the VN group data indicates a port type of at least one virtual local area network, VLAN, port corresponding to at least one member of the VN group.

7. The method according to claim 6, wherein the VN group data comprises, for each of the at least one VLAN port, the port type indicating whether the VLAN port is an access port or a trunk port;
wherein the VN group data comprises, for an access VLAN port in the at least one VLAN port, a first VLAN identifier, ID, identifying the VLAN; or
wherein the VN group data comprises, for a trunk VLAN port in the at least one VLAN port, a second VLAN ID having a predefined value corresponding to trunk port type.

8. The method according to any of claims 6 to 7, wherein the VN group data indicates, for a trunk VLAN port in the at least one VLAN port, a list of allowed VLAN ID(s) which are allowed for Ethernet protocol data unit, PDU, sessions, or a list of blocked VLAN ID(s) which are rejected for Ethernet PDU session; or wherein an absence of a list of allowed VLAN ID(s) or blocked VLAN ID(s) indicates access port type;
wherein the VN group data comprises, for the trunk VLAN port, the list of allowed VLAN ID(s) or blocked VLAN ID(s);
wherein the VN group data further comprises, for the trunk VLAN port, an indicator indicating a usage of the list of allowed VLAN ID(s) or blocked VLAN ID(s);
wherein the usage of the list of allowed VLAN ID(s) or blocked VLAN ID(s) comprises at least one of: authentication, filtering, and configuration.

9. The method according to claim 8, wherein the VN group data comprises, for the trunk VLAN port, an Internet protocol, IP, address of a server hosting the list of allowed VLAN ID(s) or blocked VLAN ID(s); and, obtaining (806) the list of allowed VLAN ID(s) or blocked VLAN ID(s) from the server.

10. A method performed by a unified data management, UDM, of a Fifth Generation System , 5GS, that provides Ethernet bridging operations for User Equipments ,UEs, acting as Ethernet access ports or Ethernet trunk ports, said method comprising the steps of :
receiving (902), from a session management function, SMF, a request for obtaining virtual network, VN, group data corresponding to a shared data identifier, ID;
obtaining (904), from a unified data repository, UDR, the VN group data corresponding to the shared data ID, wherein the VN group data indicates a port type of at least one virtual local area network, VLAN, port corresponding to at least one member of the VN group; and
sending (906) the obtained VN group data to the SMF.

11. The method according to claim 10, wherein the VN group data comprises, for each of the at least one VLAN port, the port type indicating whether the VLAN port is an access port or a trunk port;
wherein the VN group data comprises, for an access VLAN port in the at least one VLAN port, a first VLAN ID identifying the VLAN; or
wherein the VN group data comprises, for a trunk VLAN port in the at least one VLAN port, a second VLAN ID having a predefined value corresponding to trunk port type.

12. The method according to any of claims 10 to 11, wherein the VN group data indicates, for a trunk VLAN port in the at least one VLAN port, a list of allowed VLAN ID(s) which are allowed for Ethernet protocol data unit, PDU, sessions, or a list of blocked VLAN ID(s) which are rejected for Ethernet PDU sessions; or
wherein an absence of a list of allowed VLAN ID(s) or blocked VLAN ID(s) indicates access port type;
wherein the VN group data comprises, for the trunk VLAN port, the list of allowed VLAN ID(s) or blocked VLAN ID(s);
wherein the VN group data further comprises, for the trunk VLAN port, an indicator indicating a usage of the list of allowed VLAN ID(s) or blocked VLAN ID(s);
wherein the usage of the list of allowed VLAN ID(s) or blocked VLAN ID(s) comprises at least one of: authentication, filtering, and configuration.

13. The method according to claim 12, wherein the VN group data comprises, for the trunk VLAN port, an Internet protocol, IP, address of a server hosting the list of allowed VLAN ID(s) or blocked VLAN ID(s).

14. A method performed by a unified data repository, UDR, of a Fifth Generation System , 5GS, that provides Ethernet bridging operations for User Equipments ,UEs, acting as Ethernet access ports or Ethernet trunk ports, said method comprising the steps of :
receiving (1002), from a unified data management, UDM, a request for obtaining virtual network, VN, group data corresponding to a shared data identifier, ID;
retrieving (1004) the VN group data corresponding to the shared data ID, wherein the VN group data indicates a port type of at least one virtual local area network, VLAN, port corresponding to at least one member of the VN group; and
sending (1006) the retrieved VN group data to the UDM;
wherein the VN group data comprises, for each of the at least one VLAN port, the port type indicating whether the VLAN port is an access port or a trunk port;
wherein the VN group data comprises, for an access VLAN port in the at least one VLAN port, a first VLAN ID identifying the VLAN; or
wherein the VN group data comprises, for a trunk VLAN port in the at least one VLAN port, a second VLAN ID having a predefined value corresponding to trunk port type.

15. The method according to claim 14, wherein the VN group data indicates, for a trunk VLAN port in the at least one VLAN port, a list of allowed VLAN ID(s) which are allowed for Ethernet protocol data unit, PDU, sessions, or a list of blocked VLAN ID(s) which are rejected for Ethernet PDU sessions; or
wherein an absence of a list of allowed VLAN ID(s) or blocked VLAN ID(s) indicates access port type; wherein the VN group data comprises, for the trunk VLAN port, the list of allowed VLAN ID(s) or blocked VLAN ID(s);
wherein the VN group data further comprises, for the trunk VLAN port, an indicator indicating a usage of the list of allowed VLAN ID(s) or blocked VLAN ID(s);
wherein the usage of the list of allowed VLAN ID(s) or blocked VLAN ID(s) comprises at least one of: authentication, filtering, and configuration;
wherein the VN group data comprises, for the trunk VLAN port, an Internet protocol, IP, address of a server hosting the list of allowed VLAN ID(s) or blocked VLAN ID(s).

16. A unified data repository, UDR (1400), of a Fifth Generation System ,5GS, that provides Ethernet bridging operations for User Equipments ,UEs, acting as Ethernet access ports or Ethernet trunk ports, said UDR
at least one processor (1410); and
at least one memory (1420), the at least one memory (1420) containing instructions which , when executed by the at least one processor (1410), cause said UDR (1400) to perform all the steps of a method of according to any of claims of 1-5.

17. An apparatus (1400) implementing a session management function, SMF, for a Fifth Generation System ,5GS, that provides Ethernet bridging operations for User Equipments ,UEs, acting as Ethernet access ports or Ethernet trunk ports, said apparatus (1410) comprising :
at least one processor (1410); and
at least one memory (1420), the at least one memory (1420) containing instructions which, when executed by the at least one processor (1410), cause said apparatus (1400) to perform all the steps of a method according to any of claims 6 to 9.

## Patentansprüche

1. Verfahren, welches von einem vereinheitlichten Datenrepository, UDR, eines Systems der fünften Generation, 5GS, ausgeführt wird, welches Ethernet-Bridging-Operationen für Benutzergeräte, UEs, bereitstellt, welche als Ethernet-Zugangsports oder Ethernet-Trunk-Ports fungieren, wobei das Verfahren die folgenden Schritte umfasst:
Empfangen (502) einer Anfrage eines Dienstkonsumenten zum Bereitstellen von Konfigurationsinformationen in Bezug auf ein virtuelles lokales Netzwerk, VLAN, wobei die Konfigurationsinformationen den Porttyp zumindest eines zum VLAN gehörenden Ports angeben; und
Pflegen (504) der Konfigurationsinformationen;
wobei die Konfigurationsinformationen als virtuelle Netzwerk-, VN-Gruppendaten in der Anfrage beinhaltet sind; und
wobei der Schritt des Pflegens (504) der Konfigurationsinformationen die folgenden Schritte umfasst:
Speichern (606) der Konfigurationsinformationen als VN-Gruppendaten;
Zuweisen (608) einer gemeinsamen Datenkennung, ID, für die VN-Gruppendaten; und
Zuordnen (610) von Sitzungsverwaltungsdaten des Mitglieds der VN-Gruppe zu der gemeinsamen Daten-ID und einer internen Gruppen-ID für das Mitglied der VN-Gruppe für jedes Mitglied der VN-Gruppe.

2. Verfahren nach Anspruch 1, wobei die interne Gruppen-ID vom UDR zugewiesen wird und der Dienstkonsument eine vereinheitlichte Datenverwaltung, UDM, oder ein Bereitstellungssystem ist.

3. Verfahren nach einem der Ansprüche 1 oder 2, wobei die Konfigurationsinformationen für jeden des zumindest einen Ports den Porttyp umfassen, welcher angibt, ob der Port ein Zugangsport oder ein Trunk-Port ist;
wobei die Konfigurationsinformationen für einen Zugangsport in dem zumindest einen Port eine erste VLAN-ID umfassen, welche das VLAN identifiziert; oder
wobei die Konfigurationsinformationen für einen Trunk-Port in dem zumindest einen Port eine zweite VLAN-ID mit einem vordefinierten Wert umfassen, welcher dem Trunk-Porttyp entspricht.

4. Verfahren nach einem der Ansprüche 1 bis 3, wobei die Konfigurationsinformationen für einen Trunk-Port in dem zumindest einen Port eine Liste zulässiger VLAN-ID(s), welche für Ethernet-Protokolldateneinheiten, PDU-Sitzungen zulässig sind, oder eine Liste blockierter VLAN-IDs, welcher für Ethernet-PDU-Sitzungen abgelehnt werden, angeben; oder
wobei ein Fehlen einer Liste zulässiger VLAN-ID(s) oder blockierter VLAN-ID(s) den Zugangsporttyp angibt.

5. Verfahren nach Anspruch 4, wobei die Konfigurationsinformationen für den Trunk-Port in dem zumindest einen Port die Liste der zulässigen VLAN-ID(s) oder der blockierten VLAN-ID(s) umfassen;
wobei die Konfigurationsinformationen für den Trunk-Port in dem zumindest einen Port weiter eine Kennung umfassen, welche eine Verwendung der Liste der zulässigen VLAN-ID(s) oder der blockierten VLAN-ID(s) angibt;
wobei die Verwendung der Liste der zulässigen VLAN-ID(s) oder blockierten VLAN-ID(s) zumindest eines von Authentifizierung, Filtern und Konfiguration umfasst;
wobei die Konfigurationsinformationen für den Trunk-Port in dem zumindest einen Port eine Internetprotokoll, IP-Adresse eines Servers umfassen, welcher die Liste der zulässigen VLAN-ID(s) oder der blockierten VLAN-ID(s) hostet.

6. Verfahren, welches von einer Sitzungsverwaltungsfunktion, SMF, eines Systems der fünften Generation, 5GS, ausgeführt wird, welches Ethernet-Bridging-Operationen für Benutzergeräte, UEs, bereitstellt, welche als Ethernet-Zugangsports oder Ethernet-Trunk-Ports fungieren, wobei das Verfahren die folgenden Schritte umfasst:
Erhalten (702) von Sitzungsverwaltungsdaten für eine Endgerät aus einer vereinheitlichten Datenverwaltung, UDM-Sitzung, wobei die Sitzungsverwaltungsdaten angeben, dass das Endgerät zu einer virtuellen Netzwerk, VN-Gruppe mit einer gemeinsamen Daten-ID gehört; und
Erhalten (704) von VN-Gruppendaten aus dem UDM, welche der gemeinsamen Daten-ID entsprechen, wobei die VN-Gruppendaten einen Porttyp zumindest eines virtuellen lokalen Netzwerk, VLAN-Ports angeben, welcher zumindest einem Mitglied der VN-Gruppe entspricht.

7. Verfahren nach Anspruch 6, wobei die VN-Gruppendaten für jeden des zumindest einen VLAN-Ports den Porttyp umfassen, welcher angibt, ob der VLAN-Port ein Zugangsport oder ein Trunk-Port ist;
wobei die VN-Gruppendaten für einen VLAN-Zugangsport in dem zumindest einen VLAN-Port eine erste VLAN-Kennung, ID, umfassen, welche das VLAN identifiziert; oder
wobei die VN-Gruppendaten für einen Trunk-VLAN-Port in dem zumindest einen VLAN-Port eine zweite VLAN-ID mit einem vordefinierten Wert umfassen, welcher dem Trunk-Porttyp entspricht.

8. Verfahren nach einem der Ansprüche 6 bis 7, wobei die VN-Gruppendaten für einen Trunk-VLAN-Port in dem zumindest einen VLAN-Port eine Liste zulässiger VLAN-ID(s), welche für Ethernet-Protokolldateneinheiten, PDU-Sitzungen zulässig sind, oder eine Liste blockierter VLAN-ID(s), welcher für Ethernet-PDU-Sitzung abgelehnt werden, angeben; oder wobei ein Fehlen einer Liste zulässiger VLAN-ID(s) oder blockierter VLAN-ID(s) den Zugangsporttyp angibt;
wobei die VN-Gruppendaten für den Trunk-VLAN-Port die Liste der zulässigen VLAN-ID(s) oder der blockierten VLAN-ID(s) umfassen;
wobei die VN-Gruppendaten für den Trunk-VLAN-Port weiter eine Kennung umfassen, welche eine Verwendung der Liste der zulässigen VLAN-ID(s) oder der blockierten VLAN-ID(s) angibt;
wobei die Verwendung der Liste der zulässigen VLAN-ID(s) oder blockierten VLAN-ID(s) zumindest eines von Authentifizierung, Filtern und Konfiguration umfasst.

9. Verfahren nach Anspruch 8, wobei die VN-Gruppendaten für den Trunk-VLAN-Port eine Internetprotokoll, IP-Adresse eines Servers, welcher die Liste der zulässigen VLAN-ID(s) oder der blockierten VLAN-ID(s) hostet; und Erhalten (806) der Liste der zulässigen VLAN-ID(s) oder der blockierter VLAN-ID(s) vom Server umfassen.

10. Verfahren, welches von einem vereinheitlichten Datenverwaltung, UDR, eines Systems der fünften Generation, 5GS, ausgeführt wird, welches Ethernet-Bridging-Operationen für Benutzergeräte, UEs, bereitstellt, welche als Ethernet-Zugangsports oder Ethernet-Trunk-Ports fungieren, wobei das Verfahren die folgenden Schritte umfasst:
Empfangen (902) einer Anfrage zum Erhalten von Gruppendaten eines virtuellen Netzwerks, VN, welche einer gemeinsamen Datenkennung, ID, entsprechen, von einer Sitzungsverwaltungsfunktion, SMF;
Erhalten (904) von VN-Gruppendaten, welche der gemeinsamen Daten-ID entsprechen, von einem vereinheitlichten Datenrepository, UDR, wobei die VN-Gruppendaten einen Porttyp zumindest eines virtuellen lokalen Netzwerk, VLAN-Ports angeben, welcher zumindest einem Mitglied der VN-Gruppe entspricht; und
Senden (906) der erhaltenen VN-Gruppendaten an die SMF.

11. Verfahren nach Anspruch 10, wobei die VN-Gruppendaten für jeden des zumindest einen VLAN-Ports den Porttyp umfassen, welcher angibt, ob der VLAN-Port ein Zugangsport oder ein Trunk-Port ist;
wobei die VN-Gruppendaten für einen VLAN-Zugangsport in dem zumindest einen VLAN-Port eine erste VLAN-ID umfassen, welche das VLAN identifiziert; oder
wobei die VN-Gruppendaten für einen Trunk-VLAN-Port in dem zumindest einen VLAN-Port eine zweite VLAN-ID mit einem vordefinierten Wert umfassen, welcher dem Trunk-Porttyp entspricht.

12. Verfahren nach einem der Ansprüche 10 bis 11, wobei die VN-Gruppendaten für einen Trunk-VLAN-Port in dem zumindest einen VLAN-Port eine Liste zulässiger VLAN-ID(s), welche für Ethernet-Protokolldateneinheiten, PDU-Sitzungen zulässig sind, oder eine Liste blockierter VLAN-IDs, welcher für Ethernet-PDU-Sitzungen abgelehnt werden, angeben; oder
wobei ein Fehlen einer Liste zulässiger VLAN-ID(s) oder blockierter VLAN-ID(s) den Zugangsporttyp angibt;
wobei die VN-Gruppendaten für den Trunk-VLAN-Port die Liste der zulässigen VLAN-ID(s) oder der blockierten VLAN-ID(s) umfassen;
wobei die VN-Gruppendaten für den Trunk-VLAN-Port weiter eine Kennung umfassen, welche eine Verwendung der Liste der zulässigen VLAN-ID(s) oder der blockierten VLAN-ID(s) angibt;
wobei die Verwendung der Liste der zulässigen VLAN-ID(s) oder blockierten VLAN-ID(s) zumindest eines von Authentifizierung, Filtern und Konfiguration umfasst.

13. Verfahren nach Anspruch 12, wobei die VN-Gruppendaten für den Trunk-VLAN-Port eine Internetprotokoll, IP-Adresse eines Servers umfasst, welcher die Liste der zulässigen VLAN-ID(s) oder der blockierter VLAN-ID(s) hostet.

14. Verfahren, welches von einem vereinheitlichten Datenrepository, UDR, eines Systems der fünften Generation, 5GS, ausgeführt wird, welches Ethernet-Bridging-Operationen für Benutzergeräte, UEs, bereitstellt, welche als Ethernet-Zugangsports oder Ethernet-Trunk-Ports fungieren, wobei das Verfahren die folgenden Schritte umfasst:
Empfangen (1002) einer Anfrage zum Erhalten von Gruppendaten eines virtuellen Netzwerks, VN, welche einer gemeinsamen Datenkennung, ID, entsprechen, von einem vereinheitlichten Datenverwaltung, UDM;
Abrufen (1004) der VN-Gruppendaten, welche der gemeinsamen Daten-ID entsprechen, wobei die VN-Gruppendaten einen Porttyp zumindest eines virtuellen lokalen Netzwerk, VLAN-Ports angeben, welcher zumindest einem Mitglied der VN-Gruppe entspricht; und
Senden (1006) der abgerufenen VN-Gruppendaten an das UDM;
wobei die VN-Gruppendaten für jeden des zumindest einen VLAN-Ports den Porttyp umfassen, welcher angibt, ob der VLAN-Port ein Zugangsport oder ein Trunk-Port ist;
wobei die VN-Gruppendaten für einen VLAN-Zugangsport in dem zumindest einen VLAN-Port eine erste VLAN-ID umfassen, welche das VLAN identifiziert; oder
wobei die VN-Gruppendaten für einen Trunk-VLAN-Port in dem zumindest einen VLAN-Port eine zweite VLAN-ID mit einem vordefinierten Wert umfassen, welcher dem Trunk-Porttyp entspricht.

15. Verfahren nach Anspruch 14, wobei die VN-Gruppendaten für einen Trunk-VLAN-Port in dem zumindest einen VLAN-Port eine Liste zulässiger VLAN-ID(s), welche für Ethernet-Protokolldateneinheiten, PDU-Sitzungen zulässig sind, oder eine Liste blockierter VLAN-IDs, welcher für Ethernet-PDU-Sitzungen abgelehnt werden, angeben; oder
wobei ein Fehlen einer Liste zulässiger VLAN-ID(s) oder blockierter VLAN-ID(s) den Zugangsporttyp angibt;
wobei die VN-Gruppendaten für den Trunk-VLAN-Port die Liste der zulässigen VLAN-ID(s) oder der blockierten VLAN-ID(s) umfassen;
wobei die VN-Gruppendaten für den Trunk-VLAN-Port weiter eine Kennung umfassen, welche eine Verwendung der Liste der zulässigen VLAN-ID(s) oder der blockierten VLAN-ID(s) angibt;
wobei die Verwendung der Liste der zulässigen VLAN-ID(s) oder blockierten VLAN-ID(s) zumindest eines von Authentifizierung, Filtern und Konfiguration umfasst;
wobei die VN-Gruppendaten für den Trunk-VLAN-Port eine Internetprotokoll, IP-Adresse eines Servers umfasst, welcher die Liste der zulässigen VLAN-ID(s) oder der blockierter VLAN-ID(s) hostet.

16. Vereinheitlichter Datenrepository, UDR (1400) eines Systems der fünften Generation, 5GS, welches Ethernet-Bridging-Operationen für Benutzergeräte, UEs, bereitstellt, welche als Ethernet-Zugangsports oder Ethernet-Trunk-Ports fungieren, wobei das UDR
zumindest einen Prozessor (1410); und
zumindest einen Speicher (1420), wobei der zumindest eine Speicher (1420) Anweisungen enthält, welche, wenn sie von dem zumindest einen Prozessor (1410) ausgeführt werden, den UDR (1400) veranlassen, alle Schritte eines Verfahrens nach einem der Ansprüche 1-5 durchzuführen.

17. Einrichtung (1400), welche eine Sitzungsverwaltungsfunktion, SMF, für ein Systems der fünften Generation, 5GS, implementiert, welches Ethernet-Bridging-Operationen für Benutzergeräte, UEs, bereitstellt, welche als Ethernet-Zugangsports oder Ethernet-Trunk-Ports fungieren, wobei die Einrichtung (1410) umfasst:
zumindest einen Prozessor (1410); und
zumindest einen Speicher (1420), wobei der zumindest eine Speicher (1420) Anweisungen enthält, welche, wenn sie von dem zumindest einen Prozessor (1410) ausgeführt werden, die Einrichtung (1400) veranlassen, alle Schritte eines Verfahrens nach einem der Ansprüche 6 bis 9 durchzuführen.

## Revendications

1. Procédé mis en œuvre par un référentiel de données unifié, UDR, d'un système de cinquième génération, 5GS, assurant des opérations de pontage Ethernet pour des équipements d'utilisateur (UE) faisant office de ports d'accès Ethernet ou de ports de jonction Ethernet, ledit procédé comprenant les étapes consistant à :
recevoir (502), d'un consommateur de services, une demande de fourniture d'informations de configuration relatives à un réseau local virtuel, VLAN, dans lequel les informations de configuration indiquent un type de port d'au moins un port associé au VLAN ; et
gérer (504) les informations de configuration ;
dans lequel les informations de configuration sont incluses dans la demande sous forme de données de groupe de réseaux virtuels, VN ; et
dans lequel l'étape de gestion (504) des informations de configuration comprend les étapes consistant à :
stocker (606) les informations de configuration en tant que données de groupe de VN ;
attribuer (608) un identifiant, ID, de données partagé pour les données de groupe de VN ; et
associer (610), pour chaque membre du groupe de VN, des données de gestion de session du membre du groupe de VN avec l'ID de données partagé et un ID de groupe interne pour le membre du groupe de VN.

2. Procédé selon la revendication 1, dans lequel l'ID de groupe interne est attribué par l'UDR et le consommateur de services est une fonction de gestion de données unifiée, UDM, ou un système de provisionnement.

3. Procédé selon l'une quelconque des revendications 1 à 2, dans lequel les informations de configuration comprennent, pour chacun des un ou plusieurs ports, le type de port indiquant si le port est un port d'accès ou un port de jonction ;
dans lequel les informations de configuration comprennent, pour un port d'accès parmi les un ou plusieurs ports, un premier ID de VLAN identifiant le VLAN ; ou
dans lequel les informations de configuration comprennent, pour un port de jonction parmi les un ou plusieurs ports, un deuxième ID de VLAN ayant une valeur prédéfinie correspondant au type de port de jonction.

4. Procédé selon l'une quelconque des revendications 1 à 3, dans lequel les informations de configuration indiquent, pour un port de jonction parmi les un ou plusieurs ports, une liste d'ID de VLAN autorisés qui sont autorisés pour des sessions d'unité de données de protocole, PDU, Ethernet, ou une liste d'ID de VLAN bloqués qui sont refusés pour des sessions PDU Ethernet ; ou
dans lequel l'absence d'une liste d'ID de VLAN autorisés ou d'ID de VLAN bloqués indique le type de port d'accès.

5. Procédé selon la revendication 4, dans lequel les informations de configuration comprennent, pour le port de jonction parmi les un ou plusieurs ports, la liste des ID de VLAN autorisés ou des ID de VLAN bloqués ;
dans lequel les informations de configuration comprennent en outre, pour le port de jonction parmi les un ou plusieurs ports, un indicateur indiquant une utilisation de la liste des ID de VLAN autorisés ou des ID de VLAN bloqués ;
dans lequel l'utilisation de la liste des ID de VLAN autorisés ou des ID de VLAN bloqués comprend au moins une opération parmi : l'authentification, le filtrage et la configuration ;
dans lequel les informations de configuration comprennent, pour le port de jonction parmi les un ou plusieurs ports, une adresse au protocole Internet, IP, d'un serveur hébergeant la liste des ID de VLAN autorisés ou des ID de VLAN bloqués.

6. Procédé mis en œuvre par une fonction de gestion de session, SMF, d'un système de cinquième génération, 5GS, assurant des opérations de pontage Ethernet pour des équipements d'utilisateur, UE, faisant office de ports d'accès Ethernet ou de ports de jonction Ethernet, ledit procédé comprenant les étapes consistant à :
obtenir (702), à partir d'une fonction de gestion de données unifiée, UDM, des données de gestion de session pour un dispositif terminal, dans lequel les données de gestion de session indiquent que le dispositif terminal appartient à un groupe de réseaux virtuels, VN, ayant un ID de données partagé ; et
obtenir (704), à partir de l'UDM, des données du groupe de VN correspondant à l'ID de données partagé, dans lequel les données du groupe de VN indiquent un type de port d'au moins un port de réseau local virtuel, VLAN, correspondant à au moins un membre du groupe de VN.

7. Procédé selon la revendication 6, dans lequel les données du groupe de VN comprennent, pour chacun des au moins un port VLAN, le type de port indiquant si le port VLAN est un port d'accès ou un port de jonction ;
dans lequel les données du groupe de VN comprennent, pour un port VLAN d'accès parmi les un ou plusieurs ports VLAN, un premier identifiant, ID, de VLAN identifiant le VLAN ; ou
dans lequel les données du groupe de VN comprennent, pour un port VLAN de jonction parmi les un ou plusieurs ports VLAN, un second ID de VLAN ayant une valeur prédéfinie correspondant au type de port de jonction.

8. Procédé selon l'une quelconque des revendications 6 à 7, dans lequel les données du groupe de VN indiquent, pour un port VLAN de jonction parmi les un ou plusieurs ports VLAN, une liste d'ID de VLAN autorisés qui sont autorisés pour des sessions d'unité de données de protocole, PDU, Ethernet, ou une liste d'ID de VLAN bloqués qui sont refusés pour des sessions PDU Ethernet ; ou dans lequel l'absence d'une liste d'ID de VLAN autorisés ou d'ID de VLAN bloqués indique le type de port d'accès ;
dans lequel les données du groupe de VN comprennent, pour le port VLAN de jonction, la liste des ID de VLAN autorisés ou des ID de VLAN bloqués ;
dans lequel les données du groupe de VN comprennent en outre, pour le port VLAN de jonction, un indicateur indiquant une utilisation de la liste des ID de VLAN autorisés ou des ID de VLAN bloqués ;
dans lequel l'utilisation de la liste des ID de VLAN autorisés ou des ID de VLAN bloqués comprend au moins une opération parmi : l'authentification, le filtrage et la configuration.

9. Procédé selon la revendication 8, dans lequel les données du groupe de VN comprennent, pour le port VLAN de jonction, une adresse au protocole Internet, IP, d'un serveur hébergeant la liste des ID de VLAN autorisés ou des ID de VLAN bloqués ; et consistant à obtenir (806) la liste des ID de VLAN autorisés ou des ID de VLAN bloqués à partir du serveur.

10. Procédé mis en œuvre par une fonction de gestion de données unifiée, UDM, d'un système de cinquième génération, 5GS, assurant des opérations de pontage Ethernet pour des équipements d'utilisateur, UE, faisant office de ports d'accès Ethernet ou de ports de jonction Ethernet, ledit procédé comprenant les étapes consistant à :
recevoir (902), d'une fonction de gestion de session, SMF, une demande d'obtention de données de groupe de réseaux virtuels, VN, correspondant à un identifiant, ID, de données partagé ;
obtenir (904), à partir d'un référentiel de données unifié, UDR, les données du groupe de VN correspondant à l'ID de données partagé, dans lequel les données du groupe de VN indiquent un type de port d'au moins un port de réseau local virtuel, VLAN, correspondant à au moins un membre du groupe de VN ; et
envoyer (906) les données du groupe de VN obtenues à la SMF.

11. Procédé selon la revendication 10, dans lequel les données du groupe de VN comprennent, pour chacun des un ou plusieurs ports VLAN, le type de port indiquant si le port VLAN est un port d'accès ou un port de jonction ;
dans lequel les données du groupe de VN comprennent, pour un port VLAN d'accès parmi les un ou plusieurs ports VLAN, un premier ID de VLAN identifiant le VLAN ; ou
dans lequel les données du groupe de VN comprennent, pour un port VLAN de jonction parmi les un ou plusieurs ports VLAN, un second ID de VLAN ayant une valeur prédéfinie correspondant au type de port de jonction.

12. Procédé selon l'une quelconque des revendications 10 à 11, dans lequel les données du groupe de VN indiquent, pour un port VLAN de jonction parmi les un ou plusieurs ports VLAN, une liste d'ID de VLAN autorisés qui sont autorisés pour des sessions d'unité de données de protocole, PDU, Ethernet, ou une liste d'ID de VLAN bloqués qui sont refusés pour des sessions PDU Ethernet ; ou
dans lequel l'absence d'une liste d'ID de VLAN autorisés ou d'ID de VLAN bloqués indique le type de port d'accès ;
dans lequel les données du groupe de VN comprennent, pour le port VLAN de jonction, la liste des ID de VLAN autorisés ou des ID de VLAN bloqués ;
dans lequel les données du groupe de VN comprennent en outre, pour le port VLAN de jonction, un indicateur indiquant une utilisation de la liste des ID de VLAN autorisés ou des ID de VLAN bloqués ;
dans lequel l'utilisation de la liste des ID de VLAN autorisés ou des ID de VLAN bloqués comprend au moins une opération parmi : l'authentification, le filtrage et la configuration.

13. Procédé selon la revendication 12, dans lequel les données du groupe de VN comprennent, pour le port VLAN de jonction, une adresse au protocole Internet, IP, d'un serveur hébergeant la liste des ID de VLAN autorisés ou des ID de VLAN bloqués.

14. Procédé mis en œuvre par un référentiel de données unifié, UDR, d'un système de cinquième génération, 5GS, assurant des opérations de pontage Ethernet pour des équipements d'utilisateur (UE) faisant office de ports d'accès Ethernet ou de ports de jonction Ethernet, ledit procédé comprenant les étapes consistant à :
recevoir (1002), d'une fonction de gestion de données unifiée, UDM, une demande d'obtention de données du groupe de réseaux virtuels, VN, correspondant à un identifiant (ID) de données partagé ;
récupérer (1004) les données du groupe de VN correspondant à l'ID de données partagé, dans lequel les données du groupe de VN indiquent un type de port d'au moins un port de réseau local virtuel, VLAN, correspondant à au moins un membre du groupe de VN ; et
envoyer (1006) les données du groupe de VN récupérées à l'UDM ;
dans lequel les données du groupe de VN comprennent, pour chacun des un ou plusieurs ports VLAN, le type de port indiquant si le port VLAN est un port d'accès ou un port de jonction ;
dans lequel les données du groupe de VN comprennent, pour un port VLAN d'accès parmi les un ou plusieurs ports VLAN, un premier ID de VLAN identifiant le VLAN ; ou
dans lequel les données du groupe de VN comprennent, pour un port VLAN de jonction parmi les un ou plusieurs ports VLAN, un second ID de VLAN ayant une valeur prédéfinie correspondant au type de port de jonction.

15. Procédé selon la revendication 14, dans lequel les données du groupe de VN indiquent, pour un port VLAN de jonction parmi les un ou plusieurs ports VLAN, une liste d'ID de VLAN autorisés qui sont autorisés pour des sessions d'unité de données de protocole, PDU, Ethernet, ou une liste d'ID de VLAN bloqués qui sont refusés pour des sessions PDU Ethernet ; ou
dans lequel l'absence d'une liste d'ID de VLAN autorisés ou d'ID de VLAN bloqués indique le type de port d'accès ;
dans lequel les données du groupe de VN comprennent, pour le port VLAN de jonction, la liste des ID de VLAN autorisés ou des ID de VLAN bloqués ;
dans lequel les données du groupe de VN comprennent en outre, pour le port VLAN de jonction, un indicateur indiquant une utilisation de la liste des ID de VLAN autorisés ou des ID de VLAN bloqués ;
dans lequel l'utilisation de la liste des ID de VLAN autorisés ou des ID de VLAN bloqués comprend au moins une opération parmi : l'authentification, le filtrage et la configuration ;
dans lequel les données du groupe de VN comprennent, pour le port VLAN de jonction, une adresse au protocole Internet (IP) d'un serveur hébergeant la liste des ID de VLAN autorisés ou des ID de VLAN bloqués.

16. Référentiel de données unifié, UDR, (1400) d'un système de cinquième génération, 5GS, assurant des opérations de pontage Ethernet pour des équipements d'utilisateur, UE, faisant office de ports d'accès Ethernet ou de ports de jonction Ethernet, ledit UDR procédé comprenant :
au moins un processeur (1410) ; et
au moins une mémoire (1420), la au moins une mémoire (1420) contenant des instructions qui, lorsqu'elles sont exécutées par le au moins un processeur (1410), amènent ledit UDR (1400) à effectuer toutes les étapes d'un procédé selon l'une quelconque des revendications 1 à 5.

17. Appareil (1400) mettant en œuvre une fonction de gestion de session, SMF, pour un système de cinquième génération, 5GS, assurant des opérations de pontage Ethernet pour des équipements d'utilisateur, UE, faisant office de ports d'accès Ethernet ou de ports de jonction Ethernet, ledit appareil (1410) comprenant :
au moins un processeur (1410) ; et
au moins une mémoire (1420), la au moins une mémoire (1420) contenant des instructions qui, lorsqu'elles sont exécutées par le au moins un processeur (1410), amènent ledit appareil (1400) à effectuer toutes les étapes d'un procédé selon l'une quelconque des revendications 6 à 9.
